# EUROPEAN PATENT APPLICATION

(11) **EP 4 738 959 A1**
(43) Date of publication of application: **06.05.2026**
(21) Application number: 25212933.3
(22) Date of filing: 03.11.2025
(51) Int. Cl.: H04W 72/0457, H04W 72/21, H04W 72/23

(54) **WIRELESS COMMUNICATION METHOD AND COMMUNICATION DEVICE FOR HANDLING RESOURCE IN A WIRELESS COMMUNICATION SYSTEM**

(30) Priority: 05.11.2024 US 202463716686 P; 31.10.2025 US 202519375233
(71) Applicant: Acer Incorporated, New Taipei City 221 (TW)
(72) Inventor: Hsu, Yung-Lin, 221 New Taipei City (TW); Wei, Hung-Yu, 221 New Taipei City (TW)
(74) Representative: Straus, Alexander

(57) **Abstract**

A wireless communication method performed by a communication device (16, 20) includes performing at least one communication operation with a network (14, 20) via a first channel, CH (1002); and operating on a second CH according to at least one of an indication, a temporal constraint, and an interference condition (1004); wherein at least one non-primary CH access, NPCA, CH is obtained by the network.

## Description

### Field of the Invention

The present invention relates to wireless communication methods and communication devices used in a wireless communication system, and more particularly, to wireless communication methods and communication devices for handling resource for communication.

### Background of the Invention

In a wireless communication system, allocating abundant resource for the network and the communication device to communicate with each other is desirable. Nevertheless, providing the resource at all time is not the best solution. It reduces the resource usage efficiency. Thus, how to handle the resource for communication is an important problem to be solved.

### Summary of the Invention

This in mind, the present invention aims at providing wireless communication methods and communication devices for handling resource for communication to solve the abovementioned problem.

This is achieved by wireless communication methods and communication devices for handling resource for communication according to the independent claims, respectively. The dependent claims pertain to corresponding further developments and improvements.

As will be seen more clearly from the detailed description following below, a claimed wireless communication method of a communication device comprises: performing at least one communication operation with a network via a first channel (CH); and operating on a second CH according to at least one of an indication, a temporal constraint, and an interference condition; wherein at least one non-primary CH access (NPCA) CH is obtained by the network.

A claimed communication device comprises: at least one storage device; and at least one processing circuit, coupled to the at least one storage device, wherein the at least one storage device is configured to store instructions, and the at least one processing circuit is configured to execute the instructions of: performing at least one communication operation with a network via a first channel (CH); and operating on a second CH according to at least one of an indication, a temporal constraint, and an interference condition; wherein at least one non-primary CH access (NPCA) CH is obtained by the network.

A claimed wireless communication method of a network communicating with at least one communication device comprises: performing at least one communication operation with a communication device of the at least one communication device via a first channel (CH); and operating on a second CH according to at least one of an indication, a temporal constraint, and an interference condition; wherein at least one non-primary CH access (NPCA) CH is obtained by the network.

### Brief Description of the Drawings

In the following, the invention is further illustrated by way of example, taking reference to the following drawings.
FIG. 1 is a schematic diagram of a wireless communication system according to an example of the present invention.
FIG. 2 is a schematic diagram of a communication device according to an example of the present invention.
FIG. 3 is a flowchart of a process according to an example of the present invention.
FIG. 4 is a flowchart of a process according to an example of the present invention.
FIG. 5 is a sequence diagram of a process according to an example of the present invention.
FIG. 6 is a flowchart of a process according to an example of the present invention.
FIG. 7 is a schematic diagram of a primary CH and non-primary CHs according to an example of the present invention.
FIG. 8 is a sequence diagram of a process according to an example of the present invention.
FIG. 9A is a schematic diagram of a primary CH and non-primary CHs according to an example of the present invention.
FIG. 9B is a schematic diagram of a primary CH and non-primary CHs according to an example of the present invention.
FIG. 9C is a schematic diagram of a primary CH and non-primary CHs according to an example of the present invention.
FIG. 10 is a flowchart of a process according to an example of the present invention.
FIG. 11 is a flowchart of a process according to an example of the present invention.
FIG. 12 is a sequence diagram of a process according to an example of the present invention.
FIG. 13 is a flowchart of a process according to an example of the present invention.
FIG. 14 is a flowchart of a process according to an example of the present invention.
FIG. 15 is a schematic diagram of a primary CH and non-primary CHs according to an example of the present invention.
FIG. 16 is a schematic diagram of a primary CH and non-primary CHs according to an example of the present invention.
FIG. 17 is a schematic diagram of a primary CH and non-primary CHs according to an example of the present invention.
FIG. 18 is a schematic diagram of a primary CH and non-primary CHs according to an example of the present invention.
FIG. 19 is a schematic diagram of a primary CH and non-primary CHs according to an example of the present invention.
FIG. 20 is a schematic diagram of a primary CH and non-primary CHs according to an example of the present invention.
FIG. 21 is a schematic diagram of a primary CH and non-primary CHs according to an example of the present invention.
FIG. 22 is a schematic diagram of a primary CH and non-primary CHs according to an example of the present invention.
FIG. 23 is a schematic diagram of a primary CH and non-primary CHs according to an example of the present invention.
FIG. 24 is a schematic diagram of a primary CH and non-primary CHs according to an example of the present invention.
FIG. 25 is a schematic diagram of a primary CH and non-primary CHs according to an example of the present invention.
FIG. 26 is a schematic diagram of a primary CH and non-primary CHs according to an example of the present invention.
FIG. 27 is a schematic diagram of a primary CH and non-primary CHs according to an example of the present invention.
FIG. 28 is a schematic diagram of a primary CH and non-primary CHs according to an example of the present invention.
FIG. 29 is a schematic diagram of a primary CH and non-primary CHs according to an example of the present invention.
FIG. 30 is a schematic diagram of a primary CH and non-primary CHs according to an example of the present invention.
FIG. 31 is a schematic diagram of a primary CH and non-primary CHs according to an example of the present invention.
FIG. 32 is a schematic diagram of a primary CH and non-primary CHs according to an example of the present invention.
FIG. 33 is a schematic diagram of a primary CH and non-primary CHs according to an example of the present invention.
FIG. 34 is a schematic diagram of a primary CH and non-primary CHs according to an example of the present invention.
FIG. 35 is a schematic diagram of a primary CH and non-primary CHs according to an example of the present invention.
FIG. 36 is a schematic diagram of a primary CH and non-primary CHs according to an example of the present invention.
FIG. 37 is a schematic diagram of a primary CH and non-primary CHs according to an example of the present invention.
FIG. 38 is a schematic diagram of a primary CH and non-primary CHs according to an example of the present invention.

### Detailed Description

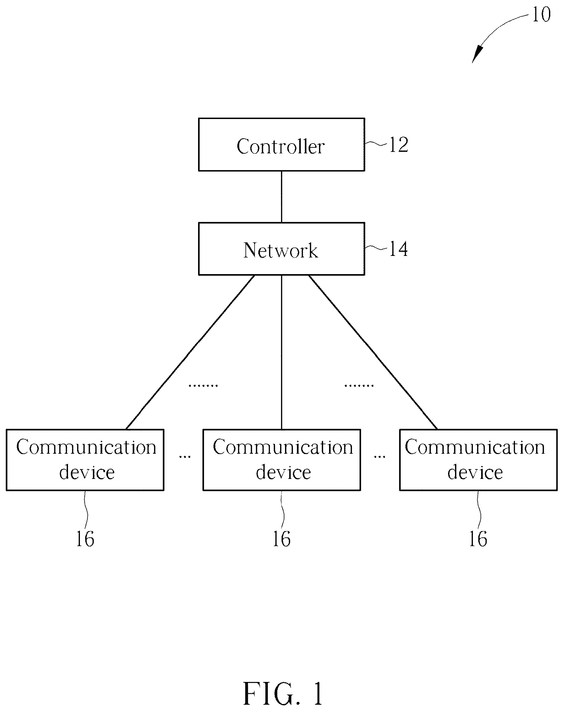

FIG. 1 is a schematic diagram of a wireless communication system 10 according to an example of the present invention. The wireless communication system 10 is briefly composed of a controller 12, a network 14 and a plurality of communication devices 16. The wireless communication system 10 may be any wireless communication system such as a wireless local area network (WLAN) system (e.g., Wi-Fi), a personal area network (PAN) system (e.g. Bluetooth (BT)), a Digital Video Broadcasting (DVB) system, a Long Term Evolution (LTE) system, a Long Term Evolution-advanced (LTE-A) system or a fifth generation (5G) system, but is not limited herein.

The wireless communication system 10 may support a time-division duplexing (TDD) mode, a frequency-division duplexing (FDD) mode, a TDD-FDD joint operation mode, a non-terrestrial network (NTN) mode or a licensed-assisted access (LAA) mode. That is, the controller 12, the network 14 and a communication device 16 may communicate via FDD carrier(s), TDD carrier(s), licensed carrier(s) (licensed serving cell(s)) and/or unlicensed carrier(s) (unlicensed serving cell(s)). In addition, the wireless communication system 10 may support a carrier aggregation (CA). That is, the controller 12, the network 14 and a communication device 16 may communicate via multiple serving carriers (e.g., multiple channels (CHs)) including a primary carrier (e.g., a primary CH) and one or more secondary carriers (e.g., secondary CHs).

In FIG. 1, the controller 12, the network 14 and the communication devices 16 are simply utilized for illustrating the structure of the wireless communication system 10. Practically, the controller 12 is a specialized networking device or application that acts as a central command center for managing and optimizing the wireless communication system 10. Designed to handle the network 14 and simplify an administration of the wireless communication system 10, the controller 12 ensures consistent performance, security, and reliability across the entire wireless communication system 10. The controller 12 enables network administrators to deploy, configure, and maintain the wireless communication system 10 by managing and monitoring the network 14.

In one example, the network 14 may be a WLAN including at least one access point (AP) and/or at least one Hotspot. In one example, the network 14 may be a universal terrestrial radio access network (UTRAN) including at least one Node-B (NB) in a universal mobile telecommunications system (UMTS). In one example, the network 14 may be an evolved UTRAN (E-UTRAN) including at least one evolved NB (eNB) and/or at least one relay node in a long term evolution (LTE) system, an LTE-Advanced (LTE-A) system, an evolution of the LTE-A system, etc. In one example, the network 14 may be a next generation radio access network (NG-RAN) including at least one next generation Node-B (gNB) and/or at least one fifth generation (5G) base station (BS). In one example, the gNB or the 5G BS of network 14 may include a NTN Gateway and a NTN payload. In one example, the gNB or the 5G BS of network 14 may be a transmission reception point (TRP). In one example, the network 14 may be any BS conforming to a specific communication standard to communicate with the controller 12 and/or a communication device 16.

A communication device 16 may be a station (STA) (e.g., non-AP STA), a user equipment (UE), a Very Small Aperture Terminal (VSAT), a low cost device (e.g., machine type communication (MTC) device), a device-to-device (D2D) communication device, a narrow-band internet of things (IoT) (NB-IoT), a mobile phone, a laptop, a tablet computer, an electronic book, a portable computer system, a home appliance, vehicles, ships, airplanes or combination thereof. In addition, the network 14 and the communication device 16 can be seen as a transmitter or a receiver according to direction (i.e., transmission direction), e.g., for an uplink (UL), the communication device 16 is the transmitter and the network 14 is the receiver, and for a downlink (DL), the network 14 is the transmitter and the communication device 16 is the receiver. It should be noted that a STA with AP functionality enabled may operate as an AP.

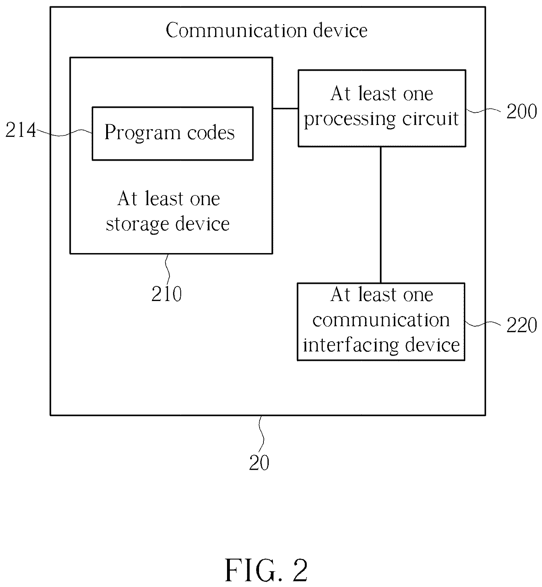

FIG. 2 is a schematic diagram of a communication device 20 according to an example of the present invention. The communication device 20 may be the controller 12, the network 14 or a communication device 16 in FIG. 1, but is not limited herein. The communication device 20 may include at least one processing circuit 200 such as a microprocessor or Application Specific Integrated Circuit (ASIC), at least one storage device 210 and at least one communication interfacing device 220. The at least one storage device 210 may be any data storage device that may store program codes 214, accessed and executed by the at least one processing circuit 200. Examples of the at least one storage device 210 include, but are not limited to, a subscriber identity module (SIM), read-only memory (ROM), flash memory, random-access memory (RAM), Compact Disc Read-Only Memory (CD-ROM), digital versatile disc-ROM (DVD-ROM), Blu-ray Disc-ROM (BD-ROM), magnetic tape, hard disk, optical data storage device, non-volatile storage device, non-transitory computer-readable medium (e.g., tangible media), etc. The at least one communication interfacing device 220 is preferably at least one transceiver and is used to transmit and receive signals (e.g., data, messages and/or packets) according to processing results of the at least one processing circuit 200.

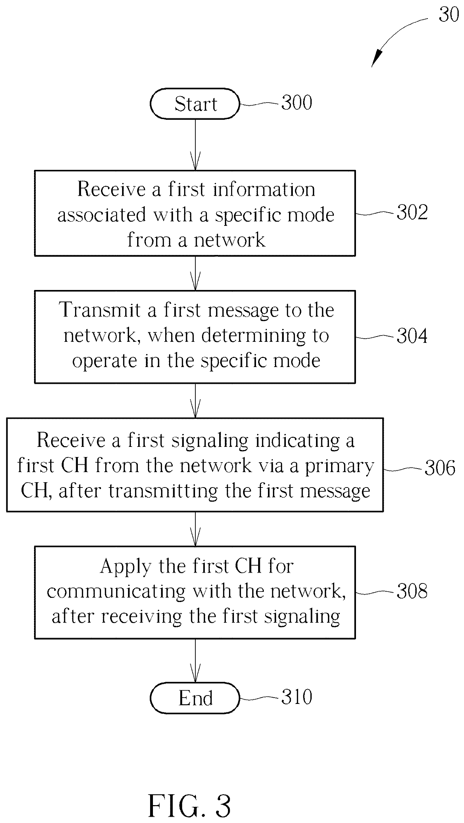

FIG. 3 is a flowchart of a process 30 according to an example of the present invention. The process 30 may be utilized in a communication device (e.g., a communication device 16 in FIG. 1 or the communication device 20 in FIG. 2), to handling resource for communication. The process 30 may be compiled into the program codes 214 and includes the following steps:

| | |
|---|---|
| Step 300: | Start. |
| Step 302: | Receive a first information associated with a specific mode from a network. |
| Step 304: | Transmit a first message to the network, when determining to operate in the specific mode. |
| Step 306: | Receive a first signaling indicating a first CH from the network via a primary CH, after transmitting the first message. |
| Step 308: | Apply the first CH for communicating with the network, after receiving the first signaling. |
| Step 310: | End. |

According to the process 30, the communication device receives a first information associated with a specific mode from a network (e.g., via the primary CH). The network may be the network 14 in FIG. 1 or the communication device 20 in FIG. 2, but is not limited herein. Then, the communication device transmits a first message to the network (e.g., via the primary CH), when determining to operate in the specific mode (e.g., to enable/enter/support the specific mode). The communication device receives a first signaling indicating a first CH (e.g., a resource (unit) for the first CH) from the network via a primary CH, after transmitting the first message. The communication device applies (e.g., starts operating) the first CH for communicating with the network (e.g., according to the first signaling), after receiving the first signaling. That is, the network indicates a new CH such as the first CH to the communication device, when the communication device determines to operate in the specific mode. The communication device performs the communication with the network by applying the first CH. Thus, the channel usage efficiency can be improved.

Realization of the process 30 is not limited to the above description. The following examples may be applied to realize the process 30.

In one example, the specific mode is a dynamic subchannel/subband operation (DSO) mode. In one example, the communication device transmits a second signaling indicating an activation of the specific mode to the network via the primary CH, when the communication device activates the specific mode. Then, the network transmits the first information to the communication device in response to the second signaling.

In one example, a controller (e.g., the controller 12 in FIG. 1 or the communication device 20 in FIG. 2) transmits the second signaling to the network via the primary CH, when the controller activates the specific mode. Then, the network transmits the first information to the communication device in response to the second signaling.

In one example, the network transmits the first information to the communication device, when activating the specific mode. In this case, the network does not receive the second signaling from the communication device or the controller, and directly informs the communication device (of/about) the first information.

In one example, the first information comprises at least one of at least one location of at least one non-primary CH and at least one bandwidth of the at least one non-primary CH. In one example, the at least one non-primary CH is at least one polling-based multi-station DSO (PMD) channel, but is not limited herein. In one example, the first information comprises at least one of a first time instant (e.g., a timestamp) to enter the specific mode, a second time instant (e.g., a timestamp) to transmit the first message, and a third time instant (e.g., a timestamp) to transmit data for a CH allocation (e.g., a reallocation message). In one example, the first information is received, after the network obtains the primary CH and the first CH for a time duration (e.g., a transmission opportunity (TXOP)).

In one example, the communication device receives a second information associated with the specific mode from the network (e.g., via the primary CH). In one example, the second information comprises at least one of a starting time instant of the specific mode and a duration of the specific mode. In one example, the second information is associated with at least one of an initial control frame (ICF) (e.g., Buffer status report poll (BSRP), Multi-user Request To Send (MU-RTS)) and an immediate response (IR). In one example, the second information is comprised in the first information, or comprised in the first signaling.

In one example, the communication device determines whether to operate in the specific mode (e.g., to enable the specific mode) according to the first information. In one example, the communication device determines whether to operate in the specific mode according to data characteristics (e.g., priority).

In one example, the communication device ignores (e.g., drops) the first information (e.g., until receiving a next first information associated with a next specific mode), when determining to disable operating in the specific mode. The next first information can be referred to the examples for the first information, and not narrated herein for brevity. In one example, the next specific mode starts later than the specific mode.

In one example, the communication device performs at least one of the following operations, when determining to disable operating in the specific mode: ignoring (e.g., disabling decoding) the first information (e.g., until receiving the next first information associated with the next specific mode); disabling transmitting the first message to the network via the primary CH; and applying (or keeping applying) the primary CH for communicating with the network.

In one example, the communication device performs at least one of the following operations, when determining to operate in the specific mode (e.g., to enable the specific mode): switching to the specific mode; performing a measurement on the at least one non-primary CH to generate (e.g., obtain) a measurement result; and generating the first message comprising the measurement result. For example, a first communication device may perform a measurement on at least one first non-primary CH, and a second communication device may perform a measurement on at least one second non-primary CH, where the at least one first non-primary CH and the at least one second non-primary CH may be partly different.

In one example, the first CH is a non-primary CH (e.g., a PMD channel). In one example, the first CH is comprised in the at least one non-primary CH. In one example, the first CH is determined (e.g., by the network) according to the first message. In one example, the first CH is determined (e.g., by the network) according to the measurement result.

In one example, the first signaling is initiated by the network, initiated/triggered by the communication device according to a first action message transmitted by the communication device, or initiated/triggered by the controller according to a second action message transmitted by the controller. In one example, the first signaling is associated with at least one of an ICF and an IR.

In one example, the communication device switches from the primary CH to the first CH according to the first signaling. In one example, the communication device applies the first CH for communicating with the network, after switching from the primary CH to the first CH. In one example, Step 308 comprises: transmitting a second message to the network via the first CH (e.g., in response to the first signaling). In one example, the communication device switches to the primary CH according to a temporal constraint (e.g., at an ending time instant of the specific mode or a timer). In one example, the communication device may switch to the primary CH after receiving an indication from the network.

In one example, the primary CH and the first CH are obtained by the network for the time duration (e.g., transmission opportunity (TXOP)). In one example, at least one of (e.g., a resource in) the primary CH and (e.g., a resource in) the first CH is allocated by the network to the communication device in a non-overlapping manner in time. For example, the primary CH and a non-primary CH (e.g., the first CH) are not allocated to the communication device at the same time. In one example, a bandwidth of the primary CH is one of 20 megahertz (MHz), 40 MHz, 80 MHz and 160 MHz. In one example, a bandwidth of the first CH is one of 20 MHz, 40 MHz, 80 MHz, 160 MHz, and 320 MHz. A bandwidth of a resource in the first CH is one of 20 MHz, 40 MHz, 80 MHz, and 160 MHz.

In one example, the primary CH and the first CH may be associated with one network (e.g., service by one AP). In one example, the primary CH and the first CH may be within one frequency band (e.g., 2.4 GHz, 5 GHz, 6 GHz, 42 GHz, etc.).

In another example, the primary CH and the first CH may be within different frequency bands. For example, the primary CH is within 5 GHz and the first CH is within 2.4 GHz.

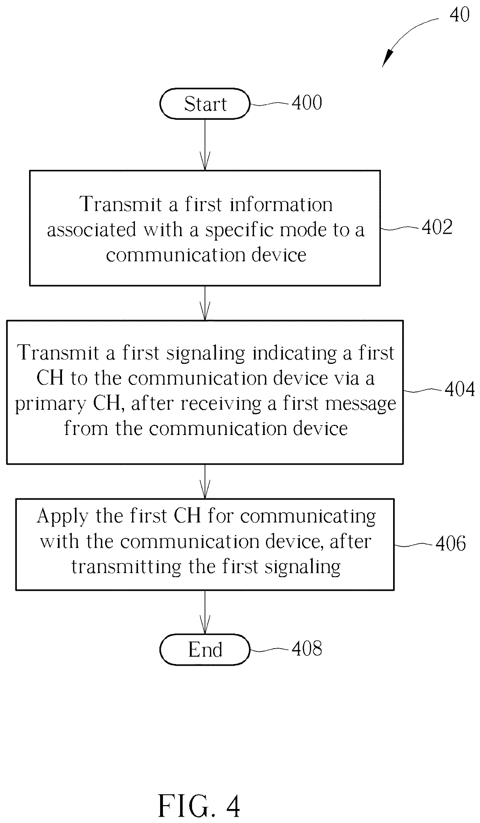

FIG. 4 is a flowchart of a process 40 according to an example of the present invention. The process 40 may be utilized in a network (e.g., the network 14 in FIG. 1 or the communication device 20 in FIG. 2) communicating with at least one communication device (e.g., the communication devices 16 in FIG. 1 or the communication device 20 in FIG. 2), to handling resource for communication. The process 40 may be compiled into the program codes 214 and includes the following steps:

| | |
|---|---|
| Step 400: | Start. |
| Step 402: | Transmit a first information associated with a specific mode to a communication device. |
| Step 404: | Transmit a first signaling indicating a first CH to the communication device via a primary CH, after receiving a first message from the communication device. |
| Step 406: | Apply the first CH for communicating with the communication device, after transmitting the first signaling. |
| Step 408: | End. |

According to the process 40, the network transmits a first information associated with a specific mode to a communication device (e.g., via the primary CH). The communication device may be a communication device 16 in FIG. 1 or the communication device 20 in FIG. 2, but is not limited herein. Then, the network receives a first message (e.g., associated with (an enablement of) the specific mode) from the communication device, and transmits a first signaling indicating a first CH to the communication device via a primary CH. The network applies the first CH for communicating with the communication device, after transmitting the first signaling. That is, the network indicates a new CH such as the first CH, and performs the communication with the communication device by applying the first CH. Thus, the channel usage efficiency can be improved.

Realization of the process 40 is not limited to the above description. The examples in the process 30 may be applied to the process 40, and are not narrated herein for brevity. In addition, the following examples may be applied to realize the process 40.

In one example, the network performs at least one of the following operations, when activating the specific mode or receiving the second signaling: switching to the specific mode; and generating the first information. The first information and the second signaling can be referred to the process 30, and are not narrated herein for brevity.

In one example, the network performs at least one of the following operations, after receiving the first message from the communication device: allocating the first CH to the communication device (e.g., according to the first message or the measurement result); and generating the first signaling indicating the first CH. The measurement result can be referred to the process 30, and is not narrated herein for brevity.

That is, the network (e.g., AP) determines and invites at least one specific communication device (e.g., STA) to join/operate in the specific mode (e.g., switch to the corresponding indicated channel).

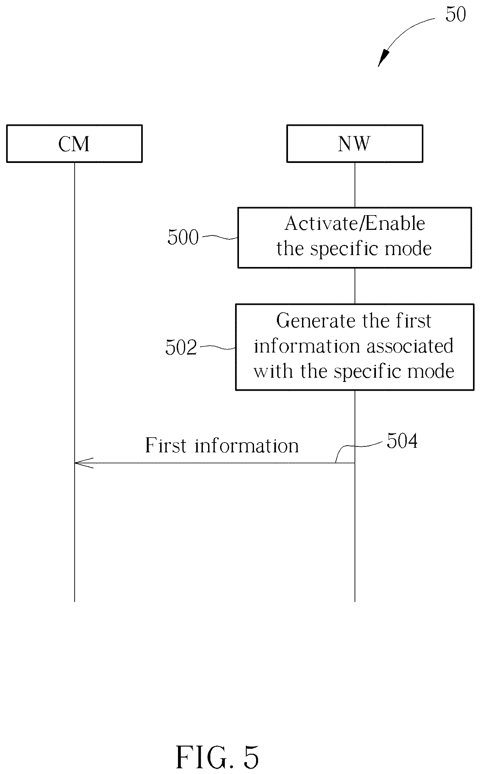

FIG. 5 is a sequence diagram of a process 50 according to an example of the present invention. There are a communication device CM and a network NW in the process 50. In one example, the network NW activates the specific mode. In one example, the communication device CM or a controller (not shown in the FIG. 5) activates the specific mode, and transmits the second signaling indicating the activation of the specific mode to the network NW. The above two examples are not shown in the FIG. 5 for brevity. In Step 500, the network NW activates/enables (e.g., switches to) the specific mode, e.g., in response to activating the specific mode or receiving the second signaling. In Step 502, the network NW generates the first information associated with the specific mode. In Step 504, the network NW transmits the first information to the communication device CM.

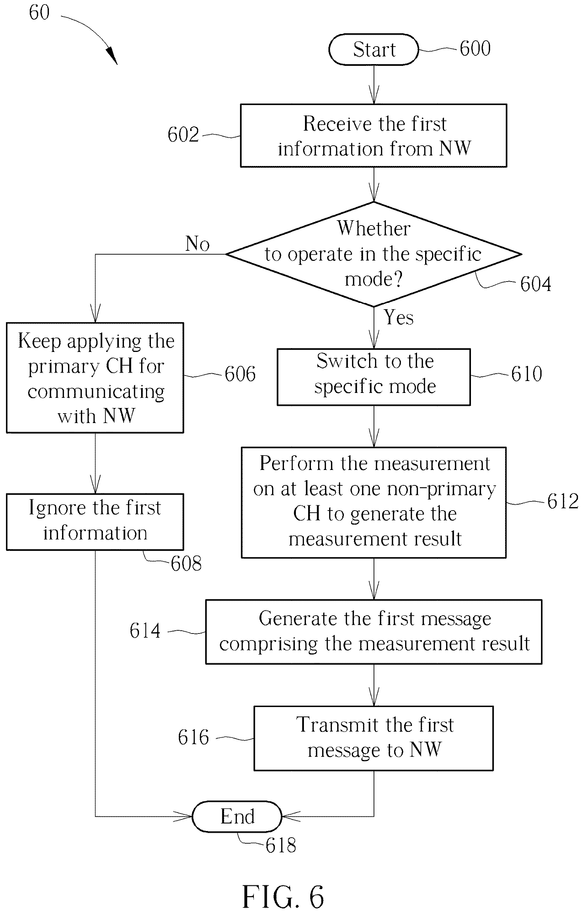

Please refer to FIG. 6 in conjunction with FIG. 5. FIG. 6 is a flowchart of a process 60 according to an example of the present invention, and illustrates operations of the communication device CM after Step 504 in FIG. 5. In Step 602, the communication device CM receives the first information from the network NW. Step 602 corresponds to Step 504 in FIG. 5. In Step 604, the communication device CM determines whether to operate in the specific mode. Then, the communication device CM performs Steps 610~616 when determining to operate in the specific mode, and performs Steps 606~608 when determining to disable operating in the specific mode.

In Step 606, the communication device CM keeps applying the primary CH for communicating with the network NW. In Step 608, the communication device CM ignores the first information. In Step 610, the communication device CM switches to the specific mode. In Step 612, the communication device CM performs the measurement on at least one non-primary CH to generate the measurement result. In Step 614, the communication device CM generates the first message comprising the measurement result. In Step 616, the communication device CM transmits the first message to the network NW.

In the following figures, a block comprised in a channel represents that a communication operation is performed via the channel. For example, a resource (e.g., resource unit in the channel) is comprised in a region shown by the block. Data transmission and/or reception is performed via the resource comprised in the channel. The resource may be indicated/allocated by the network (e.g., for scheduled transmissions). The resource may be obtained/accessed by the communication device through contention-based channel access using a distributed coordination function (DCF).

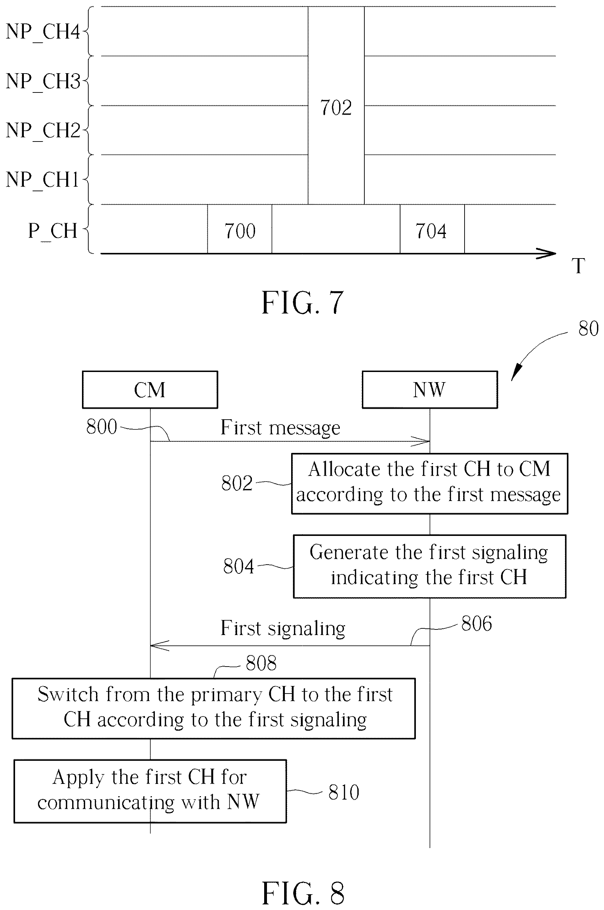

Please refer to FIG. 7 in conjunction with FIG. 6. FIG. 7 is a schematic diagram of a primary CH P_CH and non-primary CHs NP_CH1~NP_CH4 according to an example of the present invention. In FIG. 7, the primary CH P_CH and the non-primary CHs NP_CH1~NP_CH4 correspond to a time axis T, and may be the primary CH and the at least one non-primary CH in FIG. 6. A block 700 in the primary CH P_CH, a block 702 in the non-primary CHs NP_CH1~NP_CH4 and a block 704 in the primary CH P_CH correspond to Steps 602, 612 and 616 in FIG. 6, respectively. In detail, the block 700 represents that the communication device receives the first information associated with the specific mode from the network. The block 702 represents that the communication device performs the measurement on at least one of the non-primary CHs NP_CH1~NP_CH4 to generate the measurement result, when determining to operate in the specific mode. The block 704 represents that the communication device transmits the first message to the network.

Please refer to FIG. 8 in conjunction with FIG. 6. FIG. 8 is a sequence diagram of a process 80 according to an example of the present invention, and illustrates operations of the communication device CM and the network NW after Step 616 in FIG. 6. In Step 800, the communication device CM transmits the first message to the network NW. Step 800 corresponds to Step 616 in FIG. 6. In Step 802, the network NW allocates the first CH (e.g., the non-primary CH) to the communication device CM according to the first message. In Step 804, the network NW generates the first signaling indicating the first CH. In Step 806, the network NW transmits the first signaling to the communication device CM. In Step 808, the communication device CM switches from the primary CH to the first CH according to the first signaling. For example, the communication device CM transmit, via (e.g., the resource comprised in) the first CH, a message (e.g., initial control response (ICR), immediate response (IR)) corresponding to (e.g., in response to) the first signaling. In Step 810, the communication device CM applies the first CH for communicating with the network NW.

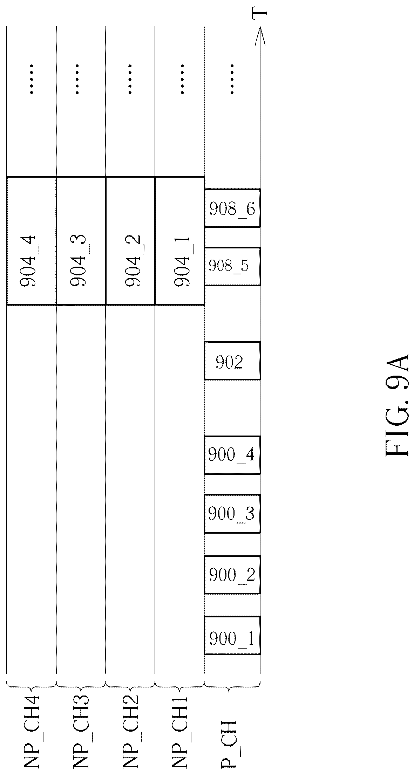

Please refer to FIG. 9A in conjunction with FIG. 8. FIG. 9A is a schematic diagram of a primary CH P_CH and non-primary CHs NP_CH1~NP_CH4 according to an example of the present invention. FIG. 8 illustrates the example for one communication device, while FIG. 9A illustrates the example for multiple communication devices CM1~CM6. The communication devices CM1~CM4 determine to operate in the specific mode, and the communication devices CM5~CM6 determine to disable operating in the specific mode. Each of the communication devices CM1~CM4 may be the communication device CM in FIG. 8.

In FIG. 9A, the primary CH P_CH and the non-primary CHs NP_CH1~NP_CH4 correspond to a time axis T. The primary CH P_CH may be the primary CH in FIG. 8. Each of the non-primary CHs NP_CH1~NP_CH4 may be the first CH in FIG. 8. Blocks 900_1, 900_2, 900_3, and 900_4 in the primary CH P_CH represent communication operations respectively performed by the communication devices CM1~CM4. For example, the blocks 900_1, 900_2, 900_3, and 900_4 correspond to Step 800 in FIG. 8. The communication devices CM1~CM4 transmit their individual first messages to the network NW, respectively. The first message corresponding to the block 900_2 may include the measurement result of NP_CH1, NP_CH2 and NP_CH4 obtained by the communication device CM2. A block 902 in the primary CH P_CH corresponds to Step 806 in FIG. 8. The communication devices CM1~CM4 receive the first signaling from the network NW. The first signaling indicates the non-primary CH NP_CH1 for the communication device CM1, indicates the non-primary CH NP_CH2 for the communication device CM2, indicates the non-primary CH NP_CH3 for the communication device CM3, and indicates the non-primary CH NP_CH4 for the communication device CM4. A primary CH and a primary band may be used interchangeably. A non-primary CH may be a subband.

After the reception of the first signaling from the network NW, the communication devices CM1~CM4 switch from the primary CH P_CH to the non-primary CHs NP_CH1~NP_CH4 (e.g., at the same time instant), respectively.

In FIG. 9A, a block 904_1 in the non-primary CH NP_CH 1, a block 904_2 in the non-primary CH NP_CH2, a block 904_3 in the non-primary CH NP_CH3, and a block 904_4 in the non-primary CH NP_CH4 represent communication operations respectively performed by the communication devices CM1~CM4. For example, the blocks 904_1, the block 904_2, the block 904_3, and the block 904_4 correspond to Step 810 in FIG. 8. The communication devices CM1~CM4 apply the non-primary CHs NP_CH1~NP_CH4 for communicating with the network NW, respectively. The communication devices CM1~CM4 transmit their individual messages (e.g., corresponding to the first signaling) to the network NW (e.g., at the same time instant), respectively. The individual message transmitted by the communication device (e.g., CM1) may be transmitted via a resource comprised in a region shown by a block (e.g., 904_1).

In addition, the communication devices CM5~CM6 which disable operating in the specific mode keep applying the primary CH P_CH for communicating with the network NW by contention-based channel access (or in sequence, by turns). For example, a block 908_5 in the primary CH P_CH represents that the communication device CM5 performs a communication operation with the network NW, and a block 908_6 in the primary CH P_CH represents that the communication device CM6 performs a communication operation with the network NW.

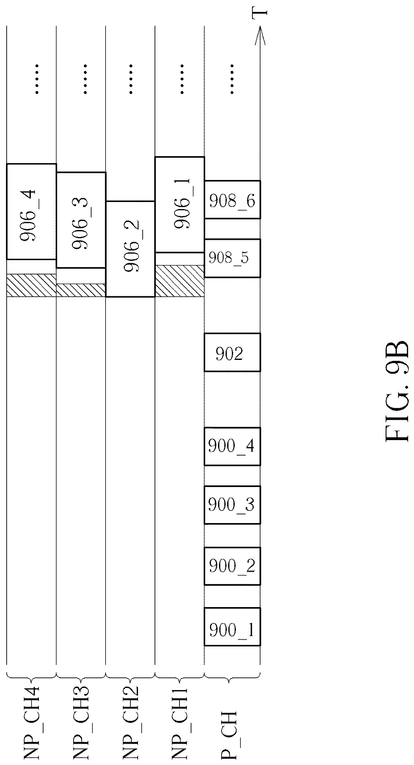

Please refer to FIG. 9B in conjunction with FIG. 8. FIG. 9B is a schematic diagram of a primary CH P_CH and non-primary CHs NP_CH1~NP_CH4 according to an example of the present invention. FIG. 8 illustrates the example for one communication device, while FIG. 9B illustrates the example for multiple communication devices CM1~CM6. The communication devices CM1~CM4 determine to operate in the specific mode, and the communication devices CM5~CM6 determine to disable operating in the specific mode. Each of the communication devices CM1~CM4 may be the communication device CM in FIG. 8.

In FIG. 9B, the primary CH P_CH and the non-primary CHs NP_CH1~NP_CH4 correspond to a time axis T. The primary CH P_CH may be the primary CH in FIG. 8. Each of the non-primary CHs NP_CH1~NP_CH4 may be the first CH in FIG. 8. Blocks 900_1, 900_2, 900_3, and 900_4 in the primary CH P_CH represent communication operations respectively performed by the communication devices CM1~CM4. For example, the blocks 900_1, 900_2, 900_3, and 900_4 correspond to Step 800 in FIG. 8. The communication devices CM1~CM4 transmit their individual first messages to the network NW, respectively. The first message corresponding to the block 900_2 may include the measurement result of the non-primary CHs NP_CH1, NP_CH2 and NP_CH4 obtained by the communication device CM2. A block 902 in the primary CH P_CH corresponds to Step 806 in FIG. 8. The communication devices CM1~CM4 receive the first signaling from the network NW. The first signaling indicates the non-primary CH NP_CH1 for the communication device CM1, indicates the non-primary CH NP_CH2 for the communication device CM2, indicates the non-primary CH NP_CH3 for the communication device CM3, and indicates the non-primary CH NP_CH4 for the communication device CM4. A primary CH and a primary band may be used interchangeably. A non-primary CH may be a subband.

After the reception of the first signaling from the network NW, the communication devices CM1~CM4 switch from the primary CH P_CH to the non-primary CHs NP_CH1~NP_CH4 (e.g., at the same time instant), respectively.

In FIG. 9B, a block 906_1 in the non-primary CH NP_CH1, a block 906_2 in the non-primary CH NP_CH2, a block 906_3 in the non-primary CH NP_CH3, and a block 906_4 in the non-primary CH NP_CH4 represent communication operations respectively performed by the communication devices CM1~CM4. For example, the blocks 906_1, the block 906_2, the block 906_3, and the block 906_4 correspond to Step 810 in FIG. 8. The communication devices CM1~CM4 apply the non-primary CHs NP_CH1~NP_CH4 for communicating with the network NW, respectively. Before transmitting or receiving messages/data via a channel, the communication device may perform carrier sensing on the channel (e.g., at the same time instant).

When the channel is idle, not occupied or not interfered with, the communication device (e.g., the communication device CM2) accesses the channel using contention-based channel access (e.g., DCF, hybrid coordination function (HCF), enhanced distributed channel access (EDCA)) and performs the transmission or reception of messages/data (e.g., transmission of an individual message corresponding to the first signaling).

When the channel is busy, occupied or interfered with (e.g., hatch blocks in the non-primary CHs NP_CH1, NP_CH3 and NP_CH4), the communication device (e.g., the communication device CM1, CM3, CM4) defers its transmission or reception. Then, the communication device accesses the channel using contention-based channel access and performs the transmission or reception of messages/data (e.g., transmission of an individual message corresponding to the first signaling). The individual message transmitted by the communication device (e.g., the communication device CM1) may be transmitted via a resource comprised in a region shown by a block (e.g., the block 906_1). It should be noted that although (data) transmission and/or reception may be performed corresponding to the block (e.g., 906_2), it is not depicted in this figure for brevity.

In addition, the communication devices CM5~CM6 which disable operating in the specific mode keep applying the primary CH P_CH for communicating with the network NW by contention-based channel access (or in sequence, by turns). For example, a block 908_5 in the primary CH P_CH represents that the communication device CM5 performs a communication operation with the network NW, and a block 908_6 in the primary CH P_CH represents that the communication device CM6 performs a communication operation with the network NW.

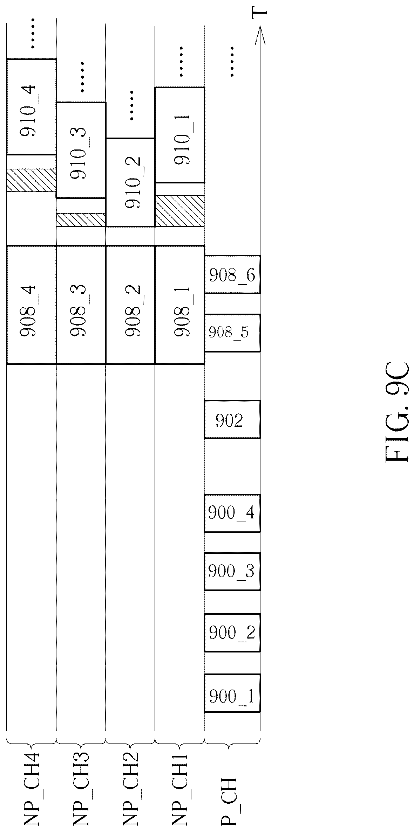

Please refer to FIG. 9C in conjunction with FIG. 8. FIG. 9C is a schematic diagram of a primary CH P_CH and non-primary CHs NP_CH1~NP_CH4 according to an example of the present invention. FIG. 8 illustrates the example for one communication device, while FIG. 9C illustrates the example for multiple communication devices CM1~CM6. The communication devices CM1~CM4 determine to operate in the specific mode, and the communication devices CM5~CM6 determine to disable operating in the specific mode. Each of the communication devices CM1~CM4 may be the communication device CM in FIG. 8.

In FIG. 9C, the primary CH P_CH and the non-primary CHs NP_CH1~NP_CH4 correspond to a time axis T. The primary CH P_CH may be the primary CH in FIG. 8. Each of the non-primary CHs NP_CH1~NP_CH4 may be the first CH in FIG. 8. Blocks 900_1, 900_2, 900_3, and 900_4 in the primary CH P_CH represent communication operations respectively performed by the communication devices CM1~CM4. For example, the blocks 900_1, 900_2, 900_3, and 900_4 correspond to Step 800 in FIG. 8. The communication devices CM1~CM4 transmit their individual first messages to the network NW, respectively. The first message corresponding to the block 900_2 may include the measurement result of NP_CH1, NP_CH2 and NP_CH4 obtained by the communication device CM2. A block 902 in the primary CH P_CH corresponds to Step 806 in FIG. 8. The communication devices CM1~CM4 receive the first signaling from the network NW. The first signaling indicates the non-primary CH NP_CH1 for the communication device CM1, indicates the non-primary CH NP_CH2 for the communication device CM2, indicates the non-primary CH NP_CH3 for the communication device CM3, and indicates the non-primary CH NP_CH4 for the communication device CM4. A primary CH and a primary band may be used interchangeably. A non-primary CH may be a subband.

After the reception of the first signaling from the network NW, the communication devices CM1~CM4 switch from the primary CH P_CH to the non-primary CHs NP_CH1~NP_CH4 (e.g., at the same time instant), respectively.

In FIG. 9C, a block 908_1 in the non-primary CH NP_CH1, a block 908_2 in the non-primary CH NP_CH2, a block 908_3 in the non-primary CH NP_CH3, and a block 908_4 in the non-primary CH NP_CH4 represent communication operations respectively performed by the communication devices CM1~CM4. For example, the blocks 908_1, the block 908_2, the block 908_3, and the block 908_4 correspond to Step 810 in FIG. 8. The communication devices CM1~CM4 apply the non-primary CHs NP_CH1~NP_CH4 for communicating with the network NW, respectively. The communication devices CM1~CM4 transmit (e.g., within a time interval without carrier sensing or using contention-based channel access) their individual messages (e.g., corresponding to the first signaling) to the network NW (e.g., at the same time instant), respectively. The individual message transmitted by the communication device (e.g., the communication device CM1) may be transmitted via a resource comprised in a region shown by a block (e.g., the block 908_1). The resource may be allocated by the network NW for the time interval.

After the time interval, a block 910_1 in the non-primary CH NP_CH1, a block 910_2 in the non-primary CH NP_CH2, a block 910_3 in the non-primary CH NP_CH3, and a block 910_4 in the non-primary CH NP_CH4 represent communication operations respectively performed by the communication devices CM1~CM4. For example, the blocks 910_1, the block 910_2, the block 910_3, and the block 910_4 also correspond to Step 810 in FIG. 8. The communication devices CM1~CM4 apply the non-primary CHs NP_CH1~NP_CH4 for communicating with the network NW, respectively. Before transmitting or receiving messages/data via a channel, the communication device may perform carrier sensing on the channel (e.g., at the same time instant).

When the channel is idle, not occupied or not interfered with, the communication device (e.g., the communication device CM2) accesses the channel using contention-based channel access (e.g., DCF, HCF, EDCA) and performs the transmission or reception of messages/data. The transmission of messages/data may exclude an individual message corresponding to the first signaling.

When the channel is busy, occupied or interfered with (e.g., hatch blocks in the non-primary CHs NP_CH1, NP_CH3 and NP_CH4), the communication device (e.g., the communication device CM1, CM3, CM4) defers its transmission or reception. Then, the communication device accesses the channel using contention-based channel access and performs the transmission or reception of messages/data. The transmission of messages/data may exclude an individual message corresponding to the first signaling. It should be noted that although (data) transmission and/or reception may be performed corresponding to the block (e.g., the block 906_2), it is not depicted in this figure for brevity.

In addition, the communication devices CM5~CM6 which disable operating in the specific mode keep applying the primary CH P_CH for communicating with the network NW by contention-based channel access (or in sequence, by turns). For example, a block 908_5 in the primary CH P_CH represents that the communication device CM5 performs a communication operation with the network NW, and a block 908_6 in the primary CH P_CH represents that the communication device CM6 performs a communication operation with the network NW.

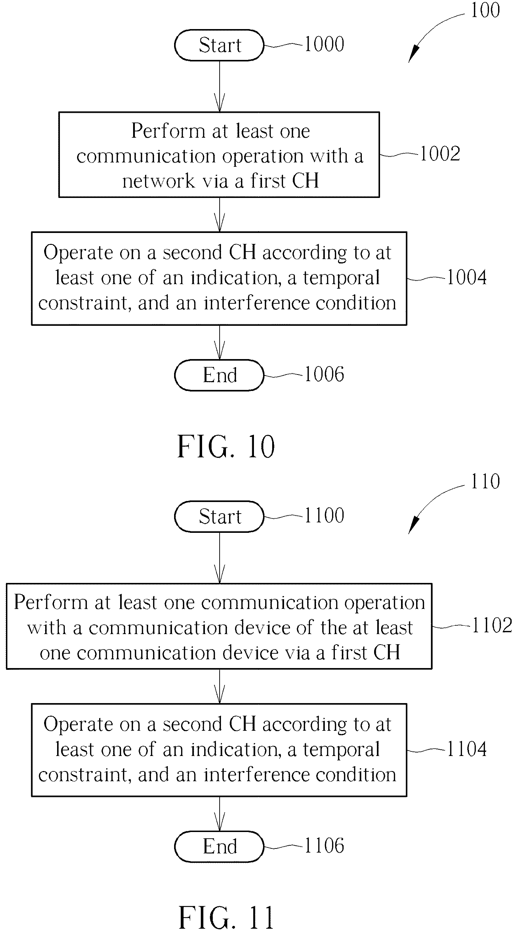

FIG. 10 is a flowchart of a process 100 according to an example of the present disclosure. The process 100 may be utilized in a communication device (e.g., a communication device 16 in FIG. 1 or the communication device 20 in FIG. 2), to handling resource for communication. The process 100 may be compiled into the program codes 214 and includes the following steps:

| | |
|---|---|
| Step 1000: | Start. |
| Step 1002: | Perform at least one communication operation with a network via a first CH. |
| Step 1004: | Operate on a second CH according to at least one of an indication, a temporal constraint, and an interference condition. |
| Step 1006: | End. |

According to the process 100, the communication device performs at least one communication operation with a network via a first CH. The network may be the network 14 in FIG. 1 or the communication device 20 in FIG. 2, but is not limited herein. Then, the communication device operates (e.g., starts operating) on a second CH according to at least one of an indication, a temporal constraint, and an interference condition. That is, the communication device dynamically applies the CH (e.g., a resource (unit) for the CH) for communicating with the network. Thus, the channel usage efficiency can be improved.

Realization of the process 100 is not limited to the above description. The following examples may be applied to realize the process 100.

In one example, the communication device supports (or is capable of) operating on an NPCA CH. In one example, the communication device enables operating on one of the at least one NPCA CH.

In one example, candidate CHs/(sub)bands (and the corresponding bandwidth) for the communication device may be dynamically updated (e.g., extended, reduced). The communication device may support and enable dynamic bandwidth expansion (DBE).

In one example, the communication device operates on the second channel, when (or is triggered by) candidate CHs which are available for the communication device or a bandwidth (BW) of the network (e.g., a BW on which the network operates) is dynamically updated (e.g., extended, reduced). In one example, the communication device operates on the second channel, when the BW of the network is updated. In one example, the communication device receives an indication (e.g., related to updated BW) when the network updates the BW.

In one example, the indication is determined (e.g., generated) by the communication device. In one example, the communication device transmits the indication to the network via the first CH. In one example, the indication is transmitted to the network, after the communication device receives an allocation inquiry message from the network. For example, the indication is transmitted to the network via a resource unit (e.g., 20 MHz) comprised in the first CH (e.g., 80 MHz). In one example, the indication is determined (e.g., generated) by the network (e.g., a DBE enabled AP). In one example, the communication device receives the indication from the network via the first CH. In one example, the network obtains at least one non-primary CH access (NPCA) CH.

In one example, the communication device transmits an allocation request to the network (e.g., via the first CH). In one example, the allocation inquiry message is received (e.g., by the communication device via the first CH), after the communication device transmits the allocation request.

In one example, the indication indicates at least one of a data information and a role intention. In one example, the data information indicates at least one of a volume of data (to be transmitted) and a traffic type (e.g., priority) of the data. In one example, the role intention indicates one of a CH reduction, a CH reservation, and a CH extension. The role intention indicating the CH reduction may be equivalent to no indication/transmission of the CH reservation and the CH extension. More volume and/or higher priority traffic type may be equivalent to the intention of the CH extension. Less volume and/or lower priority traffic type may be equivalent to the intention of the CH reduction.

In one example, the communication device determines the role intention in response to receiving the allocation inquiry message. In one example, the step of determining the role intention comprises at least one of the following operations: determining whether to need the CH extension; and determining whether to (be able to) donate the first CH. In one example, the step of determining the role intention comprises at least one of the following operations: determining the role intention to indicate the CH reduction, when the communication device does not need the CH extension and/or is able to donate the first CH; determining the role intention to indicate the CH reservation, when the communication device does not need the CH extension and/or is not able to donate the first CH; and determining the role intention to indicate the CH extension, when the communication device needs the CH extension. For example, when the communication device (determines to) operate in a power saving mode, the communication device may not need the CH extension.

In one example, the communication device receives a first allocation message from the network via the first CH according to the indication. In one example, the first allocation message indicates the second CH. In one example, the first allocation message indicates the second CH to single one communication device (e.g., the communication device). In one another example, the first allocation message indicates the second CH to multiple communication devices (e.g., the communication device and another communication device).

In one example, the second CH is determined according to the indication.

In one example, the second CH is determined according to a measurement result obtained by the communication device. In one example, the second CH is determined by the network. In one example, the measurement result is comprised in the indication or a previous message prior to the indication. In one example, the previous message is transmitted to the network via a primary CH. In one example, the measurement result comprises at least one of a first measurement result of at least one secondary CH (SCH) and a second measurement result of the at least one NPCA CH. In one example, the first measurement result and the second measurement result is transmitted via a same message or different messages. In one example, the communication device performs at least one measurement on the at least one NPCA CH to obtain the second measurement result, when candidate CHs which are available for the communication device or a bandwidth (BW) of the network (e.g., a BW on which the network operates) is dynamically updated (e.g., extended, reduced), or the communication device supports (or enables) operating on a NPCA CH, or prefers a CH reduction. The second CH may comprise at least one of the at least one SCH and the at least one NPCA CH.

In one example, the second CH is one of a primary CH, a first non-primary CH (e.g., subband), and a second non-primary CH, when the indication indicates a CH reduction. In one example, the first non-primary CH is comprised in the first CH, and has a narrower (or not broader) bandwidth than the first CH. In one example, the second non-primary CH is not comprised in the first CH, and has a narrower bandwidth than the first CH. In one example, the first non-primary CH or the second non-primary CH is indicated by a second allocation message received from the network via the first CH. In one example, the communication device determines the first non-primary CH or the second non-primary CH. In one example, the second non-primary CH is one of the at least one NPCA CH. In one example, when the communication device determines (e.g., prefers) the CH reduction, the communication device may determine (e.g., expect) that the second CH is the primary CH or the first non-primary CH (e.g., regardless of whether an explicit indication is received). For example, the communication device determines the first non-primary CH when determining (e.g., preferring) the CH reduction. In one example, when the communication device indicates the CH reduction and/or lower traffic type, the indication transmitted by the communication device may (further) indicate a target CH (e.g., the primary CH or a narrower CH comprised in the first CH). According to the received indication, the network understands that the communication device may/will switch to the target CH.

In one example, the second CH is the first CH or comprises a third non-primary CH, when a CH extension is enabled and/or the indication indicates a CH extension. In one example, the CH extension is triggered by the network. In one example, the second CH has a broader (or not narrower) bandwidth than the first CH. In one example, the third non-primary CH is a whole available CH comprising the first CH, or is an additional available CH other than the first CH.

In one example, the second CH is the first CH, when the indication indicates a CH reservation. In one example, when the communication device determines (e.g., prefers) the CH reservation, the communication device may determine (e.g., expect) that the second CH is the first CH (e.g., regardless of whether an explicit indication is received).

In one example, the second CH comprises at least one of a primary CH, a specific non-primary CH (e.g., which is not a NPCA CH), and a specific NPCA CH. In one example, the first CH comprises at least one of a primary CH, a specific non-primary CH (e.g., which is not a NPCA CH), and a specific NPCA CH.

In one example, the second CH is one of a SCH, an NPCA PCH, and an NPCA SCH dedicated to the communication device, when the first CH is a PCH. In one example, the second CH is one of the PCH, the NPCA PCH, and the NPCA SCH, when the first CH is the SCH. In one example, the second CH is one of the PCH, the SCH, and the NPCA SCH, when the first CH is the NPCA PCH. In one example, the second CH is one of the PCH, the SCH, and the NPCA PCH, when the first CH is the NPCA SCH.

In one example, the temporal constraint is determined by the communication device or is indicated by the network for at least one communication device. In one example, (all of) the at least one communication device operates in the specific mode. In one example, the temporal constraint is received from the network via the first CH. In one example, the temporal constraint is indicated by an allocation message received from the network. In one example, the temporal constraint indicates at least one of a time instant and a timer. For example, (all of) the at least one communication device starts operating on (e.g., switch to) the corresponding CH at the time instant. In one example, the communication device switches to the primary CH according to the temporal constraint (e.g., at an ending time instant of the specific mode or a timer).

In one example, the first CH is a fourth non-primary CH. In one example, the first CH is an NPCA CH. In one another example, the first CH is not an NPCA CH.

In one example, the primary CH, the first CH, and the second CH are obtained by the network for a time duration (e.g., TXOP). In one example, at least one of (resource in) the primary CH, (resource in) the first CH, and (resource in) the second CH is allocated by the network to the communication device in a non-overlapping manner in time. For example, the primary CH and a non-primary CH (e.g., the first CH, the second CH) are not allocated to the communication device at the same time.

In one example, the communication device switches from the primary CH to the first CH to communicate with the network. In one example, the communication device receives a third allocation message indicating the first CH from the network via the primary CH. In one example, the communication device performs the at least one communication operation with the network, after switching to (or operating on) the first CH.

In one example, the communication device operates on the second CH, when operating in a specific mode. In one example, the specific mode is a DSO mode.

In one example, Step 1004 comprises: switching from the first CH to the second CH to communicate with the network. In one example, the step of switching from the first CH to the second CH comprises at least one of the following operations: determining whether the second CH is the primary CH; and determining whether the second CH is the first CH. In one example, the step of switching from the first CH to the second CH comprises at least one of the following operations: switching from the first CH to the second CH, when the second CH is neither the primary CH nor the first CH; keeping applying the first CH for communicating with the network, when the second CH is the first CH; and switching from the first CH to the primary CH, when the second CH is the primary CH.

In one example, a bandwidth of the primary CH is one of 20 megahertz (MHz), 40 MHz, 80 MHz and 160 MHz. In one example, a bandwidth of the first CH is one of 20 MHz, 40 MHz, 80 MHz, 160 MHz, and 320 MHz. In one example, a bandwidth of the second CH is one of 20 MHz, 40 MHz, 80 MHz, 160 MHz, and 320 MHz.

It should be noted that the process 100 may be the subsequence operations of the process 30. Thus, the examples in the process 30 may be applied to the process 100, and are not narrated herein for brevity.

FIG. 11 is a flowchart of a process 110 according to an example of the present disclosure. The process 110 may be utilized in a network (e.g., the network 14 in FIG. 1 or the communication device 20 in FIG. 2) communicating with at least one communication device (e.g., the communication devices 16 in FIG. 1 or the communication device 20 in FIG. 2), to handling resource for communication. The process 110 may be compiled into the program codes 214 and includes the following steps:

| | |
|---|---|
| Step 1100: | Start. |
| Step 1102: | Perform at least one communication operation with a communication device of the at least one communication device via a first CH. |
| Step 1104: | Operate on a second CH according to at least one of an indication, a temporal constraint, and an interference condition. |
| Step 1106: | End. |

According to the process 110, the network performs at least one communication operation with a communication device of the at least one communication device via a first CH. The communication device may be a communication device 16 in FIG. 1 or the communication device 20 in FIG. 2, but is not limited herein. Then, the network operates (e.g., starts operating) on a second CH according to at least one of an indication, a temporal constraint, and an interference condition. That is, the network dynamically applies the CH (e.g., a resource (unit) for the CH) for communicating with the communication device. Thus, the channel usage efficiency can be improved.

Realization of the process 110 is not limited to the above description. The examples in the process 100 may be applied to the process 110, and are not narrated herein for brevity. In addition, the following examples may be applied to realize the process 110.

In one example, candidate (sub)bands (and the corresponding bandwidth) for the communication device may be dynamically updated (e.g., extended, reduced). The network may support and enable DBE.

In one example, the network obtains at least one NPCA CH. In one example, the network performs at least one of the following operations, after receiving the indication from the communication device: allocating (or reallocating) the second CH to the communication device (e.g., according to the at least one of the indication, the temporal constraint, and the interference condition); generating the first allocation message indicating the second CH. The indication, the second CH and the first allocation message can be referred to the process 100, and are not narrated herein for brevity.

It should be noted that the process 110 may be the subsequence operations of the process 40. Thus, the examples in the process 40 may be applied to the process 110, and are not narrated herein for brevity.

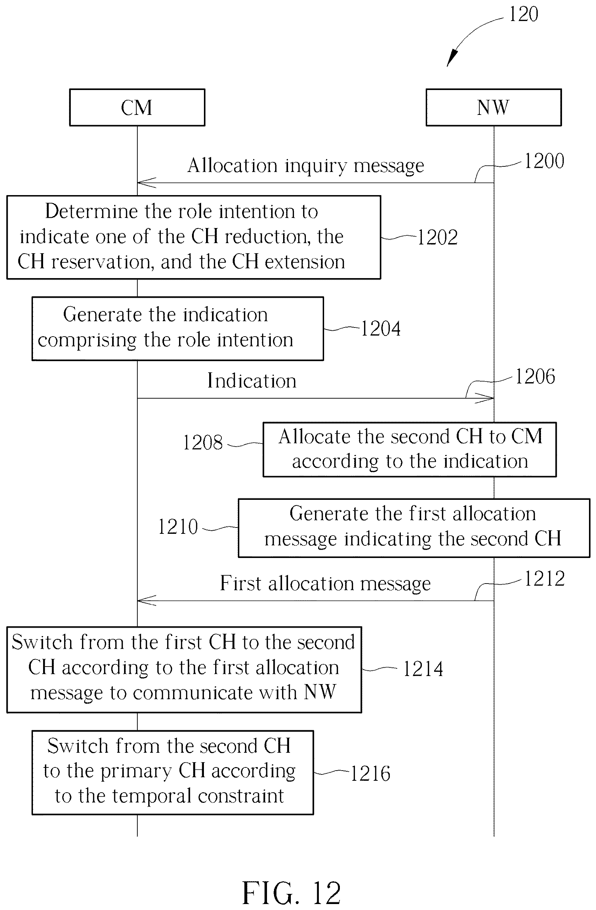

FIG. 12 is a sequence diagram of a process 120 according to an example of the present disclosure. There are a communication device CM and a network NW in the process 120, and the process 120 may be the subsequence operations of the process 80. In Step 1200, the network NW transmits the allocation inquiry message to the communication device CM via the first CH. In Step 1202, the communication device CM determines the role intention to indicate one of the CH reduction, the CH reservation, and the CH extension. In Step 1204, the communication device CM generates the indication comprising the role intention. In Step 1206, the communication device CM transmits the indication to the network NW via the first CH. In Step 1208, the network NW allocates (or reallocates) the second CH to the communication device CM according to the indication. In Step 1210, the network NW generates the first allocation message indicating the second CH. In Step 1212, the network NW transmits the first allocation message to the communication device CM via the first CH. In Step 1214, the communication device CM switches from the first CH to the second CH according to the first allocation message to communicate with NW. In Step 1216, the communication device CM switches from the second CH to the primary CH according to the temporal constraint.

In the process 120, the communication device does not perform Step 1216, if the second CH is the primary CH.

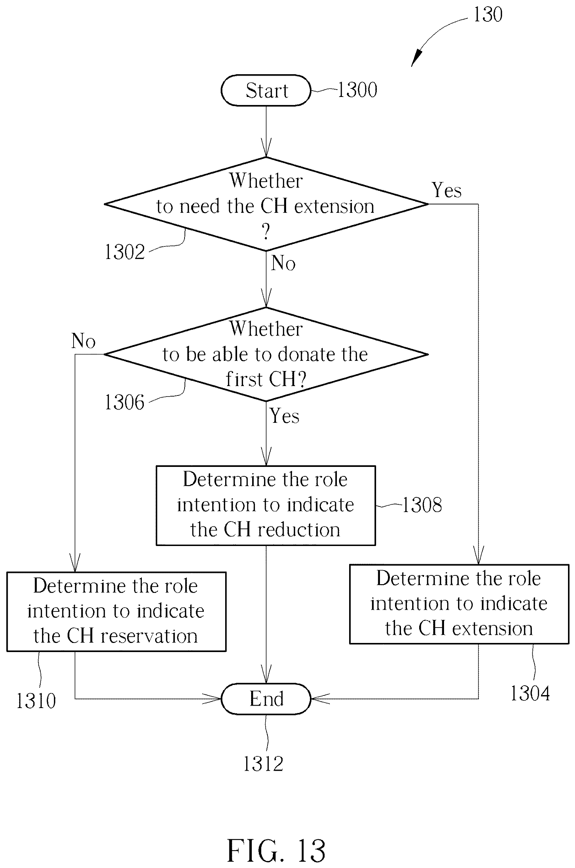

Please refer to FIG. 13 in conjunction with FIG. 12. FIG. 13 is a flowchart of a process 130 according to an example of the present disclosure, and illustrates the detail of Step 1202 in FIG. 12. In Step 1302, the communication device CM determines whether to need the CH extension. Then, the communication device CM performs Step 1304 when determining to need the CH extension, and performs Step 1306 when determining not to need the CH extension. In Step 1304, the communication device CM determines the role intention to indicate the CH extension. In Step 1306, the communication device CM determines whether to be able to donate the first CH. Then, the communication device CM performs Step 1308 when determining to be able to donate the first CH, and performs Step 1310 when determining not to be able to donate the first CH. In Step 1308, the communication device CM determines the role intention to indicate the CH reduction. In Step 1310, the communication device CM determines the role intention to indicate the CH reservation.

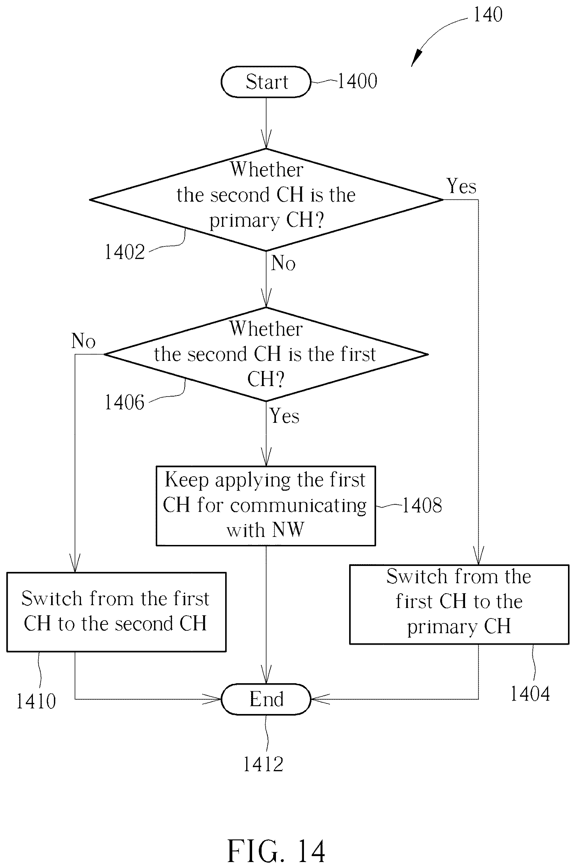

Please refer to FIG. 14 in conjunction with FIG. 12. FIG. 14 is a flowchart of a process 140 according to an example of the present disclosure, and illustrates the detail of Step 1214 in FIG. 12. In Step 1402, the communication device CM determines whether the second CH is the primary CH. Then, the communication device CM performs Step 1404 when determining that the second CH is the primary CH, and performs Step 1406 when determining that the second CH is not the primary CH. In Step 1404, the communication device CM switches from the first CH to the primary CH. In Step 1406, the communication device CM determines whether the second CH is the first CH. Then, the communication device CM performs Step 1408 when determining that the second CH is the first CH, and performs Step 1410 when determining that the second CH is not the first CH. In Step 1408, the communication device CM keeps applying the first CH for communicating with the network NW. In Step 1410, the communication device CM switches from the first CH to the second CH. It should be noted that when the communication device indicates the CH extension but there is no additional available CH, the communication device keeps applying the first CH.

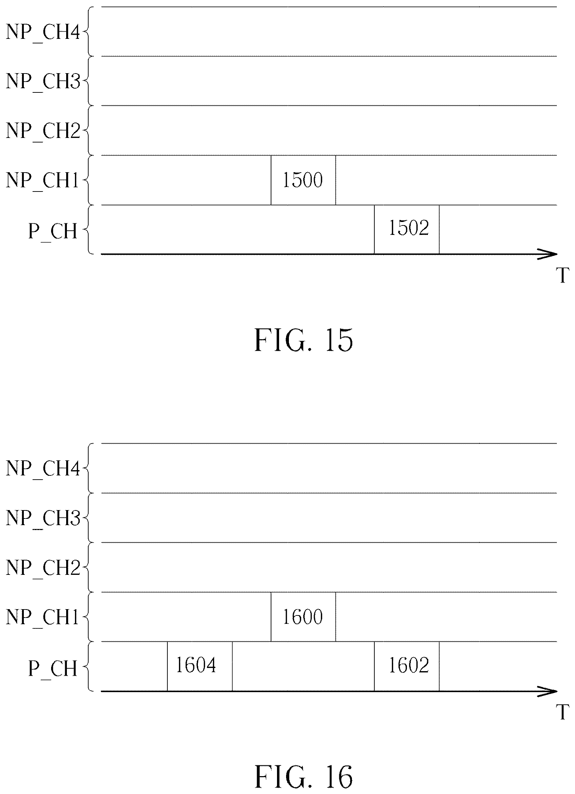

Please refer to FIG. 15 in conjunction with FIG. 14. FIG. 15 is a schematic diagram of a primary CH P_CH and non-primary CHs NP_CH1~NP_CH4 according to an example of the present disclosure. In FIG. 15, the primary CH P_CH and the non-primary CHs NP_CH1~NP_CH4 correspond to a time axis T. The CHs NP_CH1~NP_CH2 are not NPCA CHs, the CH NP_CH3 is an NPCA PCH, and the CH NP_CH4 is an NPCA SCH. The communication device CM operates in the specific mode, and applies the non-primary CH NP_CH1 (e.g., a block 1500). The communication device CM switches from the non-primary CH NP_CH1 to the primary CH P_CH (e.g., a block 1502) (e.g., according to the first allocation message), which corresponds to Step 1410 in FIG. 14. In this case, the CH expansion is disabled, the BW available for the communication device is reduced, or the indication (e.g., the role intention) indicates the CH reduction.

Please refer to FIG. 16 in conjunction with FIGs. 8 and 14. FIG. 16 is a schematic diagram of a primary CH P_CH and non-primary CHs NP_CH1~NP_CH4 according to an example of the present disclosure. In FIG. 16, the primary CH P_CH and the non-primary CHs NP_CH1~NP_CH4 correspond to a time axis T. The CHs NP_CH1~NP_CH2 are not NPCA CHs, the CH NP_CH3 is an NPCA PCH, and the CH NP_CH4 is an NPCA SCH. The communication device CM operates in the specific mode, and applies the primary CH P_CH (e.g., a block 1604). The communication device CM switches from the primary CH P_CH to the non-primary CH NP_CH1 (e.g., a block 1600). The communication device CM switches from the non-primary CH NP_CH1 to the primary CH P_CH (e.g., a block 1602) (e.g., according to the first allocation message), which corresponds to Step 1410 in FIG. 14. For example, the first allocation message is received by the communication device CM from the network NW via the non-primary CH NP_CH1 (e.g., the block 1600). In this case, the CH expansion is disabled, the BW available for the communication device is reduced, or the indication (e.g., the role intention) indicates the CH reduction.

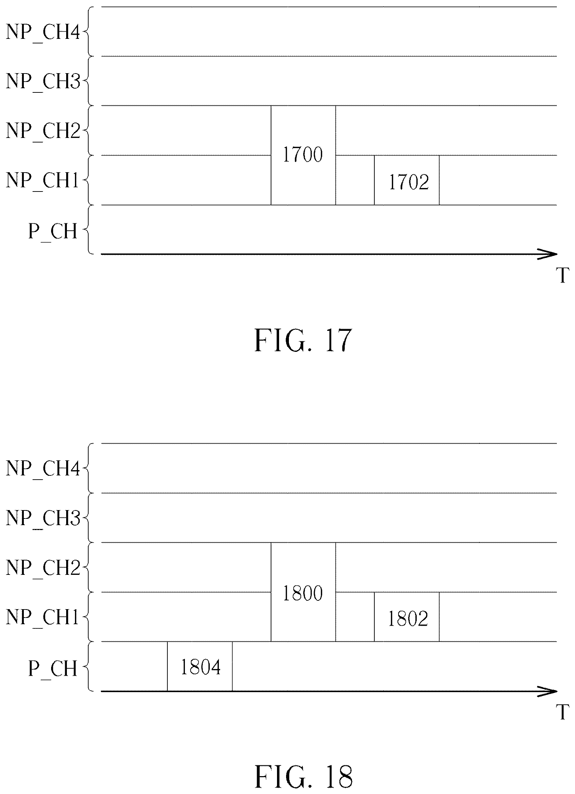

Please refer to FIG. 17 in conjunction with FIG. 14. FIG. 17 is a schematic diagram of a primary CH P_CH and non-primary CHs NP_CH1~NP_CH4 according to an example of the present disclosure. In FIG. 17, the primary CH P_CH and the non-primary CHs NP_CH1~NP_CH4 correspond to a time axis T. The CHs NP_CH1~NP_CH2 are not NPCA CHs, the CH NP_CH3 is an NPCA PCH, and the CH NP_CH4 is an NPCA SCH. The communication device CM operates in the specific mode, and applies (a combination of) the non-primary CHs NP_CH1~NP_CH2 (e.g., a block 1700). It should be noted that the non-primary CHs NP_CH1~NP_CH2 in this example is contiguous, but is not limited herein. The communication device CM switches from (the combination of) the non-primary CHs NP_CH1~NP_CH2 to the non-primary CH NP_CH1 (e.g., a block 1702) (e.g., according to the first allocation message), which corresponds to Step 1410 in FIG. 14. In this case, the CH expansion is disabled, the BW available for the communication device is reduced, or the indication (e.g., the role intention) indicates the CH reduction.

Please refer to FIG. 18 in conjunction with FIGs. 8 and 14. FIG. 18 is a schematic diagram of a primary CH P_CH and non-primary CHs NP_CH1~NP_CH4 according to an example of the present disclosure. In FIG. 18, the primary CH P_CH and the non-primary CHs NP_CH1~NP_CH4 correspond to a time axis T. The CHs NP_CH1~NP_CH2 are not NPCA CHs, the CH NP_CH3 is an NPCA PCH, and the CH NP_CH4 is an NPCA SCH. The communication device CM operates in the specific mode, and applies the primary CH P_CH (e.g., a block 1804). The communication device CM switches from the primary CH P_CH to (a combination of) the non-primary CHs NP_CH1~NP_CH2 (e.g., a block 1800). It should be noted that the non-primary CHs NP_CH1~NP_CH2 in this example is contiguous, but is not limited herein. The communication device CM switches from (the combination of) the non-primary CHs NP_CH1~NP_CH2 to the non-primary CH NP_CH1 (e.g., a block 1802) (e.g., according to the first allocation message), which corresponds to Step 1410 in FIG. 14. For example, the first allocation message is received by the communication device CM from the network NW via the non-primary CHs NP_CH1~NP_CH2 (e.g., the block 1800). In this case, the CH expansion is disabled, the BW available for the communication device is reduced, or the indication (e.g., the role intention) indicates the CH reduction.

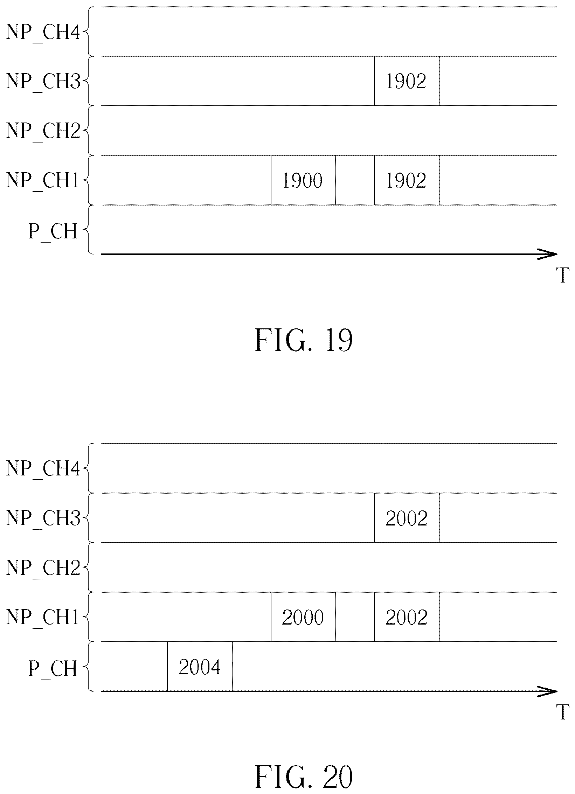

Please refer to FIG. 19 in conjunction with FIG. 14. FIG. 19 is a schematic diagram of a primary CH P_CH and non-primary CHs NP_CH1~NP_CH4 according to an example of the present disclosure. In FIG. 19, the primary CH P_CH and the non-primary CHs NP_CH1~NP_CH4 correspond to a time axis T. The CHs NP_CH1~NP_CH2 are not NPCA CHs, the CH NP_CH3 is an NPCA PCH, and the CH NP_CH4 is an NPCA SCH. The communication device CM operates in the specific mode, and applies the non-primary CH NP_CH1 (e.g., a block 1900). The communication device CM switches from the non-primary CH NP_CH1 to (a combination of) the non-primary CHs NP_CH1 and NP_CH3 (e.g., blocks 1902) (e.g., according to the first allocation message), which corresponds to Step 1410 in FIG. 14. In this case, the CH expansion is enabled, the BW available for communication device is extended, or the indication (e.g., the role intention) indicates the CH extension. The second CH is not consecutive/non-contiguous.

Please refer to FIG. 20 in conjunction with FIGs. 8 and 14. FIG. 20 is a schematic diagram of a primary CH P_CH and non-primary CHs NP_CH1~NP_CH4 according to an example of the present disclosure. In FIG. 20, the primary CH P_CH and the non-primary CHs NP_CH1~NP_CH4 correspond to a time axis T. The CHs NP_CH1~NP_CH2 are not NPCA CHs, the CH NP_CH3 is an NPCA PCH, and the CH NP_CH4 is an NPCA SCH. The communication device CM operates in the specific mode, and applies the primary CH P_CH (e.g., a block 2004). The communication device CM switches from the primary CH P_CH to the non-primary CH NP_CH1 (e.g., a block 2000). The communication device CM switches from the non-primary CH NP_CH1 to (a combination of) the non-primary CHs NP_CH1 and NP_CH3 (e.g., blocks 2002) (e.g., according to the first allocation message), which corresponds to Step 1410 in FIG. 14. For example, the first allocation message is received by the communication device CM from the network NW via the non-primary CH NP_CH1 (e.g., the block 2000). In this case, the CH expansion is enabled, the BW available for communication device is extended, or the indication (e.g., the role intention) indicates the CH extension. The second CH is not consecutive/non-contiguous.

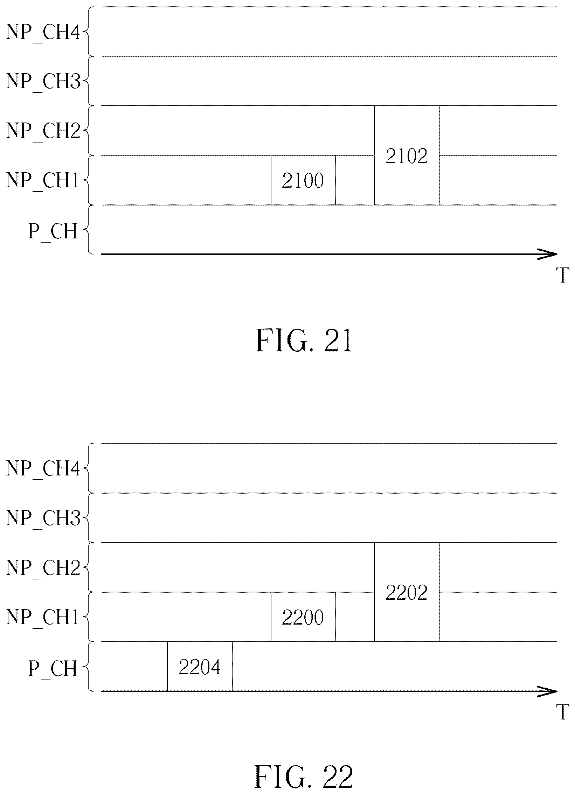

Please refer to FIG. 21 in conjunction with FIG. 14. FIG. 21 is a schematic diagram of a primary CH P_CH and non-primary CHs NP_CH1~NP_CH4 according to an example of the present disclosure. In FIG. 21, the primary CH P_CH and the non-primary CHs NP_CH1~NP_CH4 correspond to a time axis T. The CHs NP_CH1~NP_CH2 are not NPCA CHs, the CH NP_CH3 is an NPCA PCH, and the CH NP_CH4 is an NPCA SCH. The communication device CM operates in the specific mode, and applies the non-primary CH NP_CH1 (e.g., a block 2100). The communication device CM switches from the non-primary CH NP_CH1 to (a combination of) the non-primary CHs NP_CH1~NP_CH2 (e.g., a block 2102) (e.g., according to the first allocation message), which corresponds to Step 1410 in FIG. 14. In this case, the CH expansion is enabled, the BW available for communication device is extended, or the indication (e.g., the role intention) indicates the CH extension. The second CH is consecutive/contiguous.

Please refer to FIG. 22 in conjunction with FIGs. 8 and 14. FIG. 22 is a schematic diagram of a primary CH P_CH and non-primary CHs NP_CH1~NP_CH4 according to an example of the present disclosure. In FIG. 22, the primary CH P_CH and the non-primary CHs NP_CH1~NP_CH4 correspond to a time axis T. The CHs NP_CH1~NP_CH2 are not NPCA CHs, the CH NP_CH3 is an NPCA PCH, and the CH NP_CH4 is an NPCA SCH. The communication device CM operates in the specific mode, and applies the primary CH P_CH (e.g., a block 2204). The communication device CM switches from the primary CH P_CH to the non-primary CH NP_CH1 (e.g., a block 2200). The communication device CM switches from the non-primary CH NP_CH1 to (a combination of) the non-primary CHs NP_CH1~NP_CH2 (e.g., a block 2202) (e.g., according to the first allocation message), which corresponds to Step 1410 in FIG. 14. For example, the first allocation message is received by the communication device CM from the network NW via the non-primary CH NP_CH1 (e.g., the block 2200). In this case, the CH expansion is enabled, the BW available for communication device is extended, or the indication (e.g., the role intention) indicates the CH extension. The second CH is consecutive/contiguous.

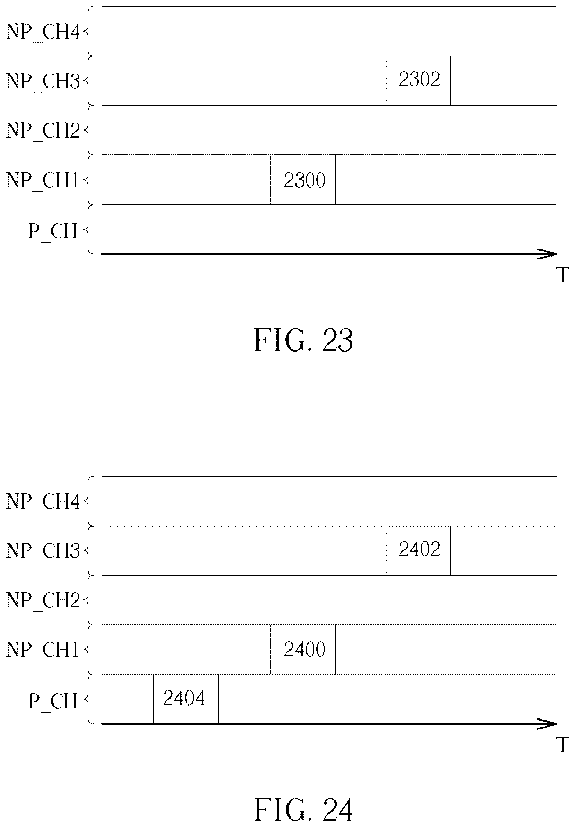

Please refer to FIG. 23 in conjunction with FIG. 14. FIG. 23 is a schematic diagram of a primary CH P_CH and non-primary CHs NP_CH1~NP_CH4 according to an example of the present disclosure. In FIG. 23, the primary CH P_CH and the non-primary CHs NP_CH1~NP_CH4 correspond to a time axis T. The CHs NP_CH1~NP_CH2 are not NPCA CHs, the CH NP_CH3 is an NPCA PCH, and the CH NP_CH4 is an NPCA SCH. The communication device CM operates in the specific mode, and applies the non-primary CH NP_CH1 (e.g., a block 2300). The communication device CM switches from the non-primary CH NP_CH1 to the non-primary CH NP_CH3 (e.g., a block 2302) (e.g., according to the first allocation message), which corresponds to Step 1410 in FIG. 14. In this case, the CH expansion is disabled, the BW available for the communication device is reduced, or the indication (e.g., the role intention) indicates the CH reduction.

Please refer to FIG. 24 in conjunction with FIGs. 8 and 14. FIG. 24 is a schematic diagram of a primary CH P_CH and non-primary CHs NP_CH1~NP_CH4 according to an example of the present disclosure. In FIG. 24, the primary CH P_CH and the non-primary CHs NP_CH1~NP_CH4 correspond to a time axis T. The CHs NP_CH1~NP_CH2 are not NPCA CHs, the CH NP_CH3 is an NPCA PCH, and the CH NP_CH4 is an NPCA SCH. The communication device CM operates in the specific mode, and applies the primary CH P_CH (e.g., a block 2404). The communication device CM switches from the primary CH P_CH to the non-primary CH NP_CH1 (e.g., a block 2400). The communication device CM switches from the non-primary CH NP_CH1 to the non-primary CH NP_CH3 (e.g., a block 2402) (e.g., according to the first allocation message), which corresponds to Step 1410 in FIG. 14. For example, the first allocation message is received by the communication device CM from the network NW via the non-primary CH NP_CH1 (e.g., the block 2400). In this case, the CH expansion is disabled, the BW available for the communication device is reduced, or the indication (e.g., the role intention) indicates the CH reduction.

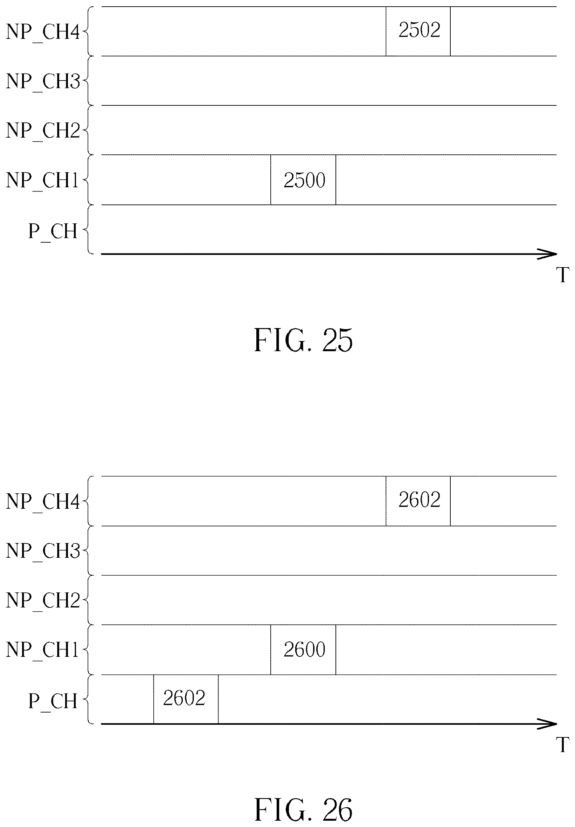

Please refer to FIG. 25 in conjunction with FIG. 14. FIG. 25 is a schematic diagram of a primary CH P_CH and non-primary CHs NP_CH1~NP_CH4 according to an example of the present disclosure. In FIG. 25, the primary CH P_CH and the non-primary CHs NP_CH1~NP_CH4 correspond to a time axis T. The CHs NP_CH1~NP_CH2 are not NPCA CHs, the CH NP_CH3 is an NPCA PCH, and the CH NP_CH4 is an NPCA SCH. The communication device CM operates in the specific mode, and applies the non-primary CH NP_CH1 (e.g., a block 2500). The communication device CM switches from the non-primary CH NP_CH1 to the non-primary CH NP_CH4 (e.g., a block 2502) (e.g., according to the first allocation message), which corresponds to Step 1410 in FIG. 14. In this case, the CH expansion is disabled, the BW available for the communication device is reduced, or the indication (e.g., the role intention) indicates the CH reduction.

Please refer to FIG. 26 in conjunction with FIGs. 8 and 14. FIG. 26 is a schematic diagram of a primary CH P_CH and non-primary CHs NP_CH1~NP_CH4 according to an example of the present disclosure. In FIG. 26, the primary CH P_CH and the non-primary CHs NP_CH1~NP_CH4 correspond to a time axis T. The CHs NP_CH1~NP_CH2 are not NPCA CHs, the CH NP_CH3 is an NPCA PCH, and the CH NP_CH4 is an NPCA SCH. The communication device CM operates in the specific mode, and applies the primary CH P_CH (e.g., a block 2604). The communication device CM switches from the primary CH P_CH to the non-primary CH NP_CH1 (e.g., a block 2600). The communication device CM switches from the non-primary CH NP_CH1 to the non-primary CH NP_CH4 (e.g., a block 2602) (e.g., according to the first allocation message), which corresponds to Step 1410 in FIG. 14. For example, the first allocation message is received by the communication device CM from the network NW via the non-primary CH NP_CH1 (e.g., the block 2600). In this case, the CH expansion is disabled, the BW available for the communication device is reduced, or the indication (e.g., the role intention) indicates the CH reduction.

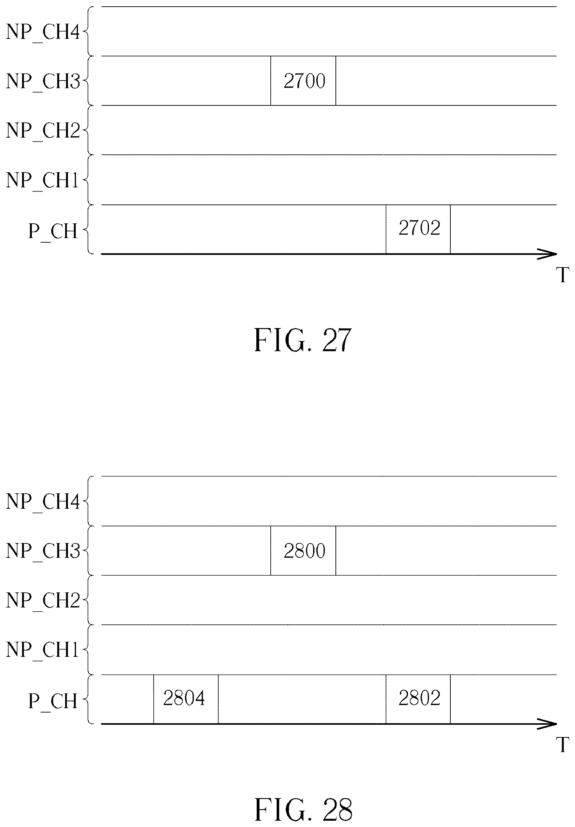

Please refer to FIG. 27 in conjunction with FIG. 14. FIG. 15 is a schematic diagram of a primary CH P_CH and non-primary CHs NP_CH1~NP_CH4 according to an example of the present disclosure. In FIG. 27, the primary CH P_CH and the non-primary CHs NP_CH1~NP_CH4 correspond to a time axis T. The CHs NP_CH1~NP_CH2 are not NPCA CHs, the CH NP_CH3 is an NPCA PCH, and the CH NP_CH4 is an NPCA SCH. The communication device CM operates in the specific mode, and applies the non-primary CH NP_CH3 (e.g., a block 2700). The communication device CM switches from the non-primary CH NP_CH3 to the primary CH P_CH (e.g., a block 2702) (e.g., according to the first allocation message), which corresponds to Step 1404 in FIG. 14. In this case, the CH expansion is disabled, the BW available for the communication device is reduced, or the indication (e.g., the role intention) indicates the CH reduction.

Please refer to FIG. 28 in conjunction with FIGs. 8 and 14. FIG. 28 is a schematic diagram of a primary CH P_CH and non-primary CHs NP_CH1~NP_CH4 according to an example of the present disclosure. In FIG. 28, the primary CH P_CH and the non-primary CHs NP_CH1~NP_CH4 correspond to a time axis T. The CHs NP_CH1~NP_CH2 are not NPCA CHs, the CH NP_CH3 is an NPCA PCH, and the CH NP_CH4 is an NPCA SCH. The communication device CM operates in the specific mode, and applies the primary CH P_CH (e.g., a block 2804). The communication device CM switches from the primary CH P_CH to the non-primary CH NP_CH3 (e.g., a block 2800). The communication device CM switches from the non-primary CH NP_CH3 to the primary CH P_CH (e.g., a block 2802) (e.g., according to the first allocation message), which corresponds to Step 1404 in FIG. 14. For example, the first allocation message is received by the communication device CM from the network NW via the non-primary CH NP_CH3 (e.g., the block 2800). In this case, the CH expansion is disabled, the BW available for the communication device is reduced, or the indication (e.g., the role intention) indicates the CH reduction.

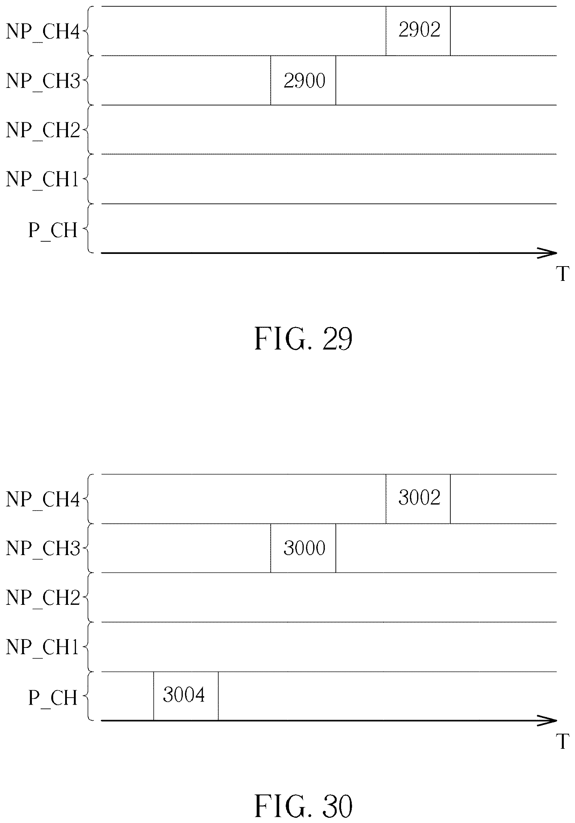

Please refer to FIG. 29 in conjunction with FIG. 14. FIG. 29 is a schematic diagram of a primary CH P_CH and non-primary CHs NP_CH1~NP_CH4 according to an example of the present disclosure. In FIG. 29, the primary CH P_CH and the non-primary CHs NP_CH1~NP_CH4 correspond to a time axis T. The CHs NP_CH1~NP_CH2 are not NPCA CHs, the CH NP_CH3 is an NPCA PCH, and the CH NP_CH4 is an NPCA SCH. The communication device CM operates in the specific mode, and applies the non-primary CH NP_CH3 (e.g., a block 2900). The communication device CM switches from the non-primary CH NP_CH3 to the non-primary CH NP_CH4 (e.g., a block 2902) (e.g., according to the first allocation message), which corresponds to Step 1410 in FIG. 14. In this case, the CH expansion is disabled, the BW available for the communication device is reduced, or the indication (e.g., the role intention) indicates the CH reduction.

Please refer to FIG. 30 in conjunction with FIGs. 8 and 14. FIG. 30 is a schematic diagram of a primary CH P_CH and non-primary CHs NP_CH1~NP_CH4 according to an example of the present disclosure. In FIG. 30, the primary CH P_CH and the non-primary CHs NP_CH1~NP_CH4 correspond to a time axis T. The CHs NP_CH1~NP_CH2 are not NPCA CHs, the CH NP_CH3 is an NPCA PCH, and the CH NP_CH4 is an NPCA SCH. The communication device CM operates in the specific mode, and applies the primary CH P_CH (e.g., a block 3004). The communication device CM switches from the primary CH P_CH to the non-primary CH NP_CH3 (e.g., a block 3000). The communication device CM switches from the non-primary CH NP_CH3 to the non-primary CH NP_CH4 (e.g., a block 3002) (e.g., according to the first allocation message), which corresponds to Step 1410 in FIG. 14. For example, the first allocation message is received by the communication device CM from the network NW via the non-primary CH NP_CH3 (e.g., the block 3000). In this case, the CH expansion is disabled, the BW available for the communication device is reduced, or the indication (e.g., the role intention) indicates the CH reduction.

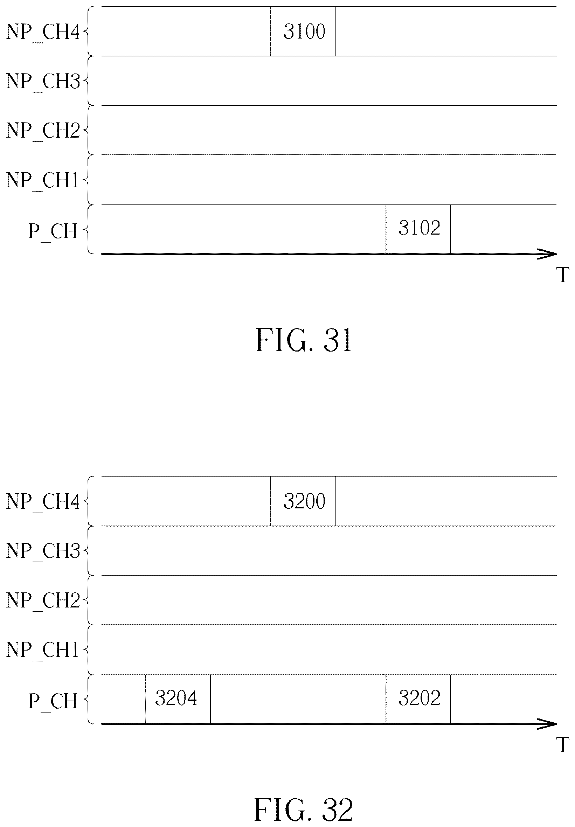

Please refer to FIG. 31 in conjunction with FIG. 14. FIG. 31 is a schematic diagram of a primary CH P_CH and non-primary CHs NP_CH1~NP_CH4 according to an example of the present disclosure. In FIG. 31, the primary CH P_CH and the non-primary CHs NP_CH1~NP_CH4 correspond to a time axis T. The CHs NP_CH1~NP_CH2 are not NPCA CHs, the CH NP_CH3 is an NPCA PCH, and the CH NP_CH4 is an NPCA SCH. The communication device CM operates in the specific mode, and applies the non-primary CH NP_CH4 (e.g., a block 3100). The communication device CM switches from the non-primary CH NP_CH4 to the primary CH P_CH (e.g., a block 3102) (e.g., according to the first allocation message), which corresponds to Step 1404 in FIG. 14. In this case, the CH expansion is disabled, the BW available for the communication device is reduced, or the indication (e.g., the role intention) indicates the CH reduction.

Please refer to FIG. 32 in conjunction with FIGs. 8 and 14. FIG. 32 is a schematic diagram of a primary CH P_CH and non-primary CHs NP_CH1~NP_CH4 according to an example of the present disclosure. In FIG. 32, the primary CH P_CH and the non-primary CHs NP_CH1~NP_CH4 correspond to a time axis T. The CHs NP_CH1~NP_CH2 are not NPCA CHs, the CH NP_CH3 is an NPCA PCH, and the CH NP_CH4 is an NPCA SCH. The communication device CM operates in the specific mode, and applies the primary CH P_CH (e.g., a block 3204). The communication device CM switches from the primary CH P_CH to the non-primary CH NP_CH4 (e.g., a block 3200). The communication device CM switches from the non-primary CH NP_CH4 to the primary CH P_CH (e.g., a block 3202) (e.g., according to the first allocation message), which corresponds to Step 1404 in FIG. 14. For example, the first allocation message is received by the communication device CM from the network NW via the non-primary CH NP_CH4 (e.g., the block 3200). In this case, the CH expansion is disabled, the BW available for the communication device is reduced, or the indication (e.g., the role intention) indicates the CH reduction.

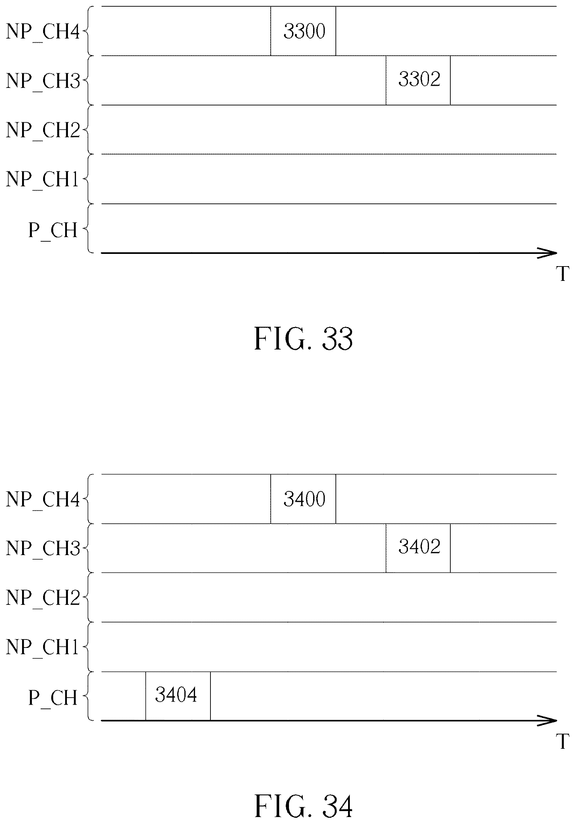

Please refer to FIG. 33 in conjunction with FIG. 14. FIG. 33 is a schematic diagram of a primary CH P_CH and non-primary CHs NP_CH1~NP_CH4 according to an example of the present disclosure. In FIG. 33, the primary CH P_CH and the non-primary CHs NP_CH1~NP_CH4 correspond to a time axis T. The CHs NP_CH1~NP_CH2 are not NPCA CHs, the CH NP_CH3 is an NPCA PCH, and the CH NP_CH4 is an NPCA SCH. The communication device CM operates in the specific mode, and applies the non-primary CH NP_CH4 (e.g., a block 3300). The communication device CM switches from the non-primary CH NP_CH4 to the non-primary CH NP_CH3 (e.g., a block 3302) (e.g., according to the first allocation message), which corresponds to Step 1410 in FIG. 14. In this case, the CH expansion is disabled, the BW available for the communication device is reduced, or the indication (e.g., the role intention) indicates the CH reduction.

Please refer to FIG. 34 in conjunction with FIGs. 8 and 14. FIG. 34 is a schematic diagram of a primary CH P_CH and non-primary CHs NP_CH1~NP_CH4 according to an example of the present disclosure. In FIG. 34, the primary CH P_CH and the non-primary CHs NP_CH1~NP_CH4 correspond to a time axis T. The CHs NP_CH1~NP_CH2 are not NPCA CHs, the CH NP_CH3 is an NPCA PCH, and the CH NP_CH4 is an NPCA SCH. The communication device CM operates in the specific mode, and applies the primary CH P_CH (e.g., a block 3404). The communication device CM switches from the primary CH P_CH to the non-primary CH NP_CH4 (e.g., a block 3400). The communication device CM switches from the non-primary CH NP_CH4 to the non-primary CH NP_CH3 (e.g., a block 3402) (e.g., according to the first allocation message), which corresponds to Step 1410 in FIG. 14. For example, the first allocation message is received by the communication device CM from the network NW via the non-primary CH NP_CH4 (e.g., the block 3400). In this case, the CH expansion is disabled, the BW available for the communication device is reduced, or the indication (e.g., the role intention) indicates the CH reduction.

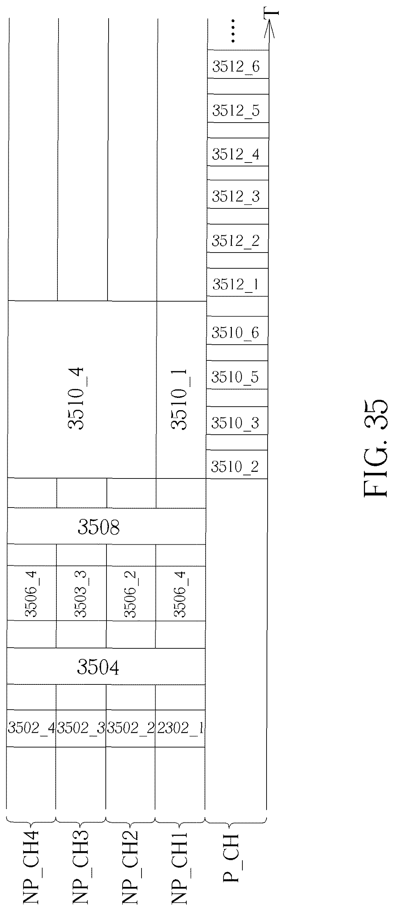

Please refer to FIG. 35 in conjunction with FIGs. 12 and 14. FIG. 35 is a schematic diagram of a primary CH P_CH and non-primary CHs NP_CH1~NP_CH4 according to an example of the present disclosure. FIG. 12 illustrates the example for one communication device, while FIG. 35 illustrates the example for multiple communication devices CM1~CM6. The communication devices CM1~CM4 operate in the specific mode, and apply the non-primary CHs NP_CH1~NP_CH4, respectively. The communication devices CM5~CM6 disable operating in the specific mode, and apply the primary CH P_CH. In addition, each of the communication devices CM1~CM4 may be the communication device CM in FIG. 12.

In FIG. 35, the primary CH P_CH and the non-primary CHs NP_CH1~NP_CH4 correspond to a time axis T. The primary CH P_CH and each of the non-primary CHs NP_CH1~NP_CH4 may be the primary CH and the first CH in FIG. 12. For the communication device CM1, the first CH is the non-primary CH NP_CH1. For the communication device CM2, the first CH is the non-primary CH NP_CH2. For the communication device CM3, the first CH is the non-primary CH NP_CH3. For the communication device CM4, the first CH is the non-primary CH NP_CH4.

A block 3502_1 in the non-primary CH NP_CH1, a block 3502_2 in the non-primary CH NP_CH2, a block 3502_3 in the non-primary CH NP_CH3 and a block 3502_4 of in non-primary CH NP_CH4 represent communication operations respectively performed by the communication devices CM1~CM4. For example, the communication devices CM1~CM4 apply the non-primary CHs NP_CH1~NP_CH4 for communicating with the network NW, respectively. The communication device (e.g., the communication device CM1) may transmit the allocation request to the network NW. The allocation request may be transmitted via a resource comprised in a region shown by a block (e.g., the block 3502_1).

A block 3504 for the non-primary CH NP_CH1~NP_CH4 corresponds to Step 1200 in FIG. 12. The network NW transmits the allocation inquiry message to the communication devices CM1~CM4. A block 3506_1 in the non-primary CH NP_CH1, a block 3506_2 in the non-primary CH NP_CH2, a block 3506_3 in the non-primary CH NP_CH3 and a block 3506_4 in the non-primary CH NP_CH4 correspond to Step 1206 in FIG. 12. The communication devices CM1~CM4 transmit their indications to the network NW, respectively. The indication from the communication device CM_1 may indicate a CH reservation. The indications from the communication devices CM2~CM3 may indicate a CH reduction. The indication from the communication device CM4 may indicate a CH extension. It should be noted that although (data) transmission and/or reception may be performed corresponding to the block (e.g., the block 3502_2), it is not depicted in this figure for brevity.

A block 3508 for the non-primary CH NP_CH1~NP_CH4 corresponds to Step 1212 in FIG. 12. The network NW transmits the first allocation message. The first allocation message indicates (a combination of) the non-primary CHs NP_CH2~NP_CH4 (i.e., the whole available CH) or the non-primary CHs NP_CH2~NP_CH3 (i.e., the additional available CH) for the communication device CM4. The first allocation message may optionally/further indicate the non-primary CH NP_CH1 for the communication device CM1. The first allocation message may optionally/further indicate the primary CH P_CH for the communication devices CM2~CM3. Accordingly, the communication device CM1 keeps applying the non-primary CH NP_CH1 (e.g., a block 3510_1), which corresponds to Step 1408 in FIG. 14. The communication devices CM2~CM3 switch to the primary CH P_CH (e.g., blocks 3510_2 and 3510_3), which corresponds to Step 1404 in FIG. 14. The communication device CM4 switches to (the combination of) the non-primary CHs NP_CH2~NP_CH4 (e.g., a block 3510_4), which corresponds to Step 1410 in FIG. 14. Since the communication devices CM2~CM3 switch to the primary CH P_CH, the communication devices CM2~CM3 and CM5~CM6 apply the primary CH P_CH (e.g., blocks 3510_2, 3510_3, 3510_5 and 3510_6) by contention-based channel access (or in sequence, by turns).

Then, the communication devices CM1 and CM4 switch to the primary CH P_CH (e.g., blocks 3512_1 and 3512_4) at the ending time instant of the specific mode, which correspond to Step 1216 in FIG. 12. Since the communication devices CM1 and CM4 switch to the primary CH P_CH, the communication devices CM1~CM6 apply the primary CH P_CH (e.g., blocks 3512_1~3512_6) by contention-based channel access (or in sequence, by turns).

FIG. 35 may be a subsequence situation of FIG. 9A (or FIG. 9B, FIG. 9C). For example, the block 904_4 corresponds to the block 3502_4.

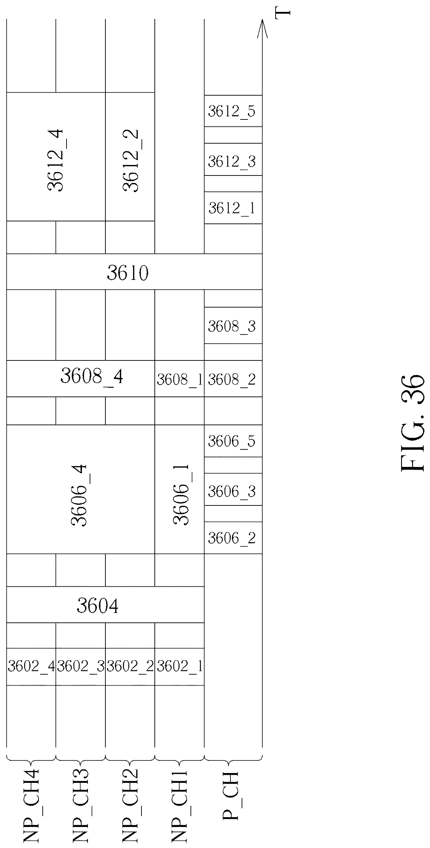

Please refer to FIG. 36 in conjunction with FIGs. 12 and 14. FIG. 36 is a schematic diagram of a primary CH P_CH and non-primary CHs NP_CH1~NP_CH4 according to an example of the present disclosure. FIG. 12 illustrates the example for one communication device, while FIG. 36 illustrates the example for multiple communication devices CM1~CM5. The communication devices CM1~CM4 operate in the specific mode, and apply the non-primary CHs NP_CH1~NP_CH4, respectively. The communication device CM5 disables operating in the specific mode, and applies the primary CH P_CH. In addition, each of the communication devices CM1~CM4 may be the communication device CM in FIG. 12.

In FIG. 36, the primary CH P_CH and the non-primary CHs NP_CH1~NP_CH4 correspond to a time axis T. The primary CH P_CH and each of the non-primary CHs NP_CH1~NP_CH4 may be the primary CH and the first CH in FIG. 12. For the communication device CM1, the first CH is the non-primary CH NP_CH1. For the communication device CM2, the first CH is the non-primary CH NP_CH2. For the communication device CM3, the first CH is the non-primary CH NP_CH3. For the communication device CM4, the first CH is the non-primary CH NP_CH4.

A blocks 3602_1 in the non-primary CH NP_CH1, a blocks 3602_2 in the non-primary CH NP_CH2, a blocks 3602_3 in the non-primary CH NP_CH3 and a blocks 3602_4 in the non-primary CH NP_CH4 represent communication operations respectively performed by the communication devices CM1~CM4. For example, the communication devices CM1~CM4 apply the non-primary CHs NP_CH1~NP_CH4 for communicating with the network NW, respectively. The communication device (e.g., the communication device CM1) may transmit the indication to the network NW. The indication may be transmitted via a resource comprised in a region shown by a block (e.g., the block 3602_1).

A block 3604 for the non-primary CH NP_CH1~NP_CH4 corresponds to Step 1212 in FIG. 12. The network NW transmits the first allocation message. The first allocation message indicates the non-primary CH NP_CH1 for the communication device CM1. The first allocation message indicates (a combination of) the non-primary CHs NP_CH2~NP_CH4 (i.e., the whole available CH) or the non-primary CHs NP_CH2~NP_CH4 (i.e., the additional available CH) for the communication device CM4. The first allocation message may optionally/further indicate the primary CH P_CH for the communication devices CM2~CM3. Accordingly, the communication device CM1 keeps applying the non-primary CH NP_CH1 (e.g., a block 3606_1), which corresponds to Step 1408 in FIG. 14. The communication devices CM2~CM3 switch to the primary CH P_CH (e.g., blocks 3606_2 and 3606_3), which corresponds to Step 1404 in FIG. 14. The communication device CM4 switches to (the combination of) the non-primary CHs NP_CH2~NP_CH4 (e.g., a block 3606_4), which corresponds to Step 1410 in FIG. 14. Since the communication devices CM2~CM3 switch to the primary CH P_CH, the communication devices CM2~CM3 and CM5 apply the primary CH P_CH (e.g., blocks 3606_2, 3606_3 and 3606_5) by contention-based channel access (or in sequence, by turns).

A block 3608_1 in the non-primary CH NP_CH1, a block 3608_2 in the non-primary CH NP_CH2, a block 3608_3 in the non-primary CH NP_CH3 and a block 3608_4 in the non-primary CH NP_CH4 correspond to Step 1206 in FIG. 12. The communication devices CM1~CM4 transmit their next individual indications to the network NW.

A block 3610 for the primary CH P_CH and the non-primary CH NP_CH1~NP_CH4 corresponds to Step 1212 in FIG. 12. The network NW transmits the next first allocation message. The next first allocation message indicates the primary CH P_CH for the communication devices CM1 and CM3. The next first allocation message indicates (a combination) of the non-primary CHs NP_CH3~NP_CH4 (i.e., the whole available CH) or the non-primary CHs NP_CH3~NP_CH4 (i.e., the additional available CH) for the communication device CM4. The next first allocation message may optionally/further indicate the non-primary CH NP_CH2 for the communication devices CM2. Accordingly, the communication device CM1 switches to the primary CH P_CH (e.g., a block 3612_1), which corresponds to Step 1402 in FIG. 14. The communication device CM2 switches to the non-primary CH2 (e.g., a block 3612_2), which corresponds to Step 1410 in FIG. 14. The communication device CM3 keeps applying to the primary CH P_CH, which corresponds to Step 1408 in FIG. 14. The communication device CM4 switches to (the combination of) the non-primary CHs NP_CH3~NP_CH4 (e.g., a block 3612_4), which corresponds to Step 1410 in FIG. 14. In other words, (the resource in) the CH previously allocated to the communication device CM4 is reallocated/released. Since the communication device CM1 switches to the primary CH P_CH and the communication device CM2 switches away from the primary CH P_CH, the communication devices CM1, CM3 and CM5 apply the primary CH P_CH (e.g., resources 3612_1, 3612_3 and 3612_5) by contention-based channel access (or in sequence, by turns).

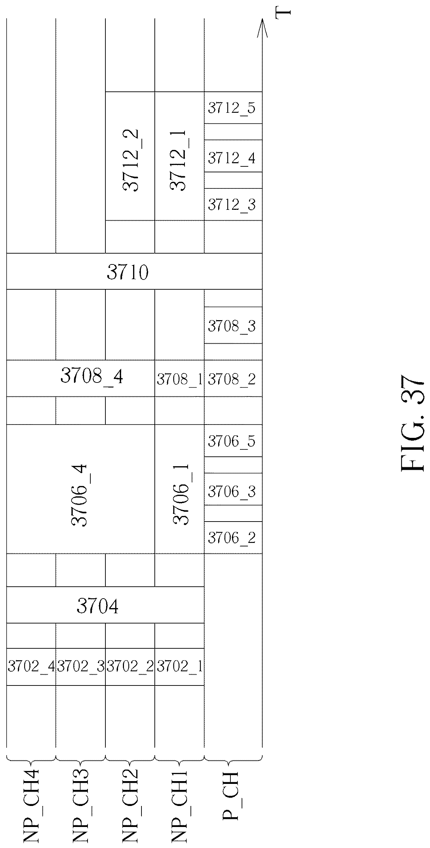

Please refer to FIG. 37 in conjunction with FIGs. 12 and 14. FIG. 37 is a schematic diagram of a primary CH P_CH and non-primary CHs NP_CH1~NP_CH4 according to an example of the present disclosure. FIG. 12 illustrates the example for one communication device, while FIG. 37 illustrates the example for multiple communication devices CM1~CM5. The communication devices CM1~CM4 operate in the specific mode, and the communication device CM5 disables operating in the specific mode. In addition, each of the communication devices CM1~CM4 may be the communication device CM in FIG. 12.

In FIG. 37, blocks 3702_1~3702_4, 3704, 3706_1~3706_5 and 3708_1~3708_4 can be referred to the blocks 3602_1~3602_4, 3604, 3606_1~3606_5 and 3608_1~3608_4 in FIG. 36, and are not narrated herein.

A block 3710 for the primary CH P_CH and the non-primary CH NP_CH1~NP_CH4 corresponds to Step 1212 in FIG. 12. The network NW transmits the next first allocation message. The next first allocation message indicates the non-primary CH NP_CH1 for the communication device CM1. The next first allocation message indicates the primary CH P_CH for the communication devices CM3~CM4. The next first allocation message may optionally/further indicate the non-primary CH NP_CH2 for the communication devices CM2. Accordingly, the communication device CM1 keeps applying the non-primary CH NP_CH1 (e.g., a block 3712_1), which corresponds to Step 1408 in FIG. 14. The communication device CM2 switches to the non-primary CH NP_CH2 (e.g., a block 3712_2), which corresponds to Step 1410 in FIG. 14. The communication device CM3 keeps applying the primary CH P_CH. The communication device CM4 switches to the primary CH P_CH (e.g., a block 3712_4), which corresponds to Step 1404 in FIG. 14. Since the communication device CM2 switches away from the primary CH P_CH and the communication device CM4 switches to the primary CH P_CH, the communication devices CM3~CM5 apply the primary CH P_CH (e.g., blocks 3712_3~3712_5) by contention-based channel access (or in sequence, by turns).

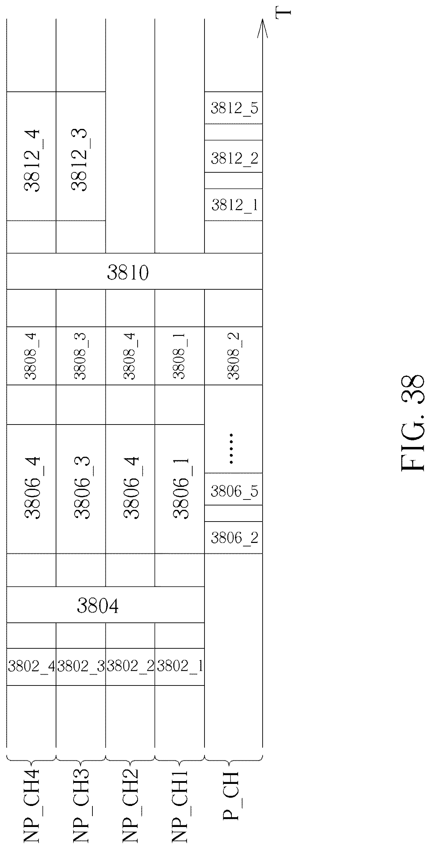

Please refer to FIG. 38 in conjunction with FIGs. 12 and 14. FIG. 38 is a schematic diagram of a primary CH P_CH and non-primary CHs NP_CH1~NP_CH4 according to an example of the present disclosure. FIG. 12 illustrates the example for one communication device, while FIG. 38 illustrates the example for multiple communication devices CM1~CM5. The communication devices CM1~CM4 operate in the specific mode, and the communication device CM5 disables operating in the specific mode. In addition, each of the communication devices CM1~CM4 may be the communication device CM in FIG. 12.

In FIG. 38, blocks 3802_1~3802_4 can be referred to the blocks 3602_1~3602_4 in FIG. 36, and are not narrated herein.

A block 3804 in the non-primary CH NP_CH1~NP_CH4 corresponds to Step 1212 in FIG. 12. The network NW transmits the first allocation message. The first allocation message indicates the non-primary CH NP_CH1 for the communication device CM1. The first allocation message indicates (a combination of) the non-primary CHs NP_CH2 and NP_CH4 for the communication device CM4. The first allocation message may optionally/further indicate the primary CH P_CH for the communication device CM2 and the non-primary CH NP_CH3 for the communication device CM3. Accordingly, the communication device CM1 keeps applying the non-primary CH NP_CH1 (e.g., a block 3806_1), which corresponds to Step 1408 in FIG. 14. The communication device CM2 switches to the primary CH P_CH (e.g., a block 3806_2), which corresponds to Step 1404 in FIG. 14. The communication device CM3 keeps applying the non-primary CH NP_CH3 (e.g., a block 3806_3), which corresponds to Step 1408 in FIG. 14. The communication device CM4 switches to (the combination of) the non-primary CHs NP_CH2 and NP_CH4 (e.g., block 3806_4), which corresponds to Step 1410 in FIG. 14. Since the communication device CM2 switches to the primary CH P_CH, the communication devices CM2 and CM5 apply the primary CH P_CH (e.g., resources 3806_2 and 3806_5) by contention-based channel access (or in sequence, by turns). For example, although both the communication device CM3 and the communication device CM4 indicate CH extension, only the communication device CM3 is allocated with more CHs (e.g., because the communication device CM3 has a higher priority and/or data to be transmitted has a higher priority).

A block 3808_1 in the non-primary CH NP_CH1, a block 3808_2 in the primary CH P_CH, a block 3808_3 in the non-primary CH NP_CH3 and a block 3808_4 in the non-primary CHs NP_CH2 and NP_CH4 correspond to Step 1206 in FIG. 12. The communication devices CM1~CM4 transmit their next individual indications to the network NW via the resources comprised in regions shown by the block 3808_1, 3808_2, 3808_3 and 3808_4, respectively.

A block 3810 in the primary CH P_CH and the non-primary CH NP_CH1~NP_CH4 corresponds to Step 1212 in FIG. 12. The network NW transmits the next first allocation message. The next first allocation message indicates the primary CH P_CH for the communication devices CM1~CM2. The next first allocation message indicates the non-primary CH NP_CH4 for the communication device CM4. The next first allocation message may optionally/further indicate the non-primary CH NP_CH3 for the communication device CM3. Accordingly, the communication device CM1 switches to the primary CH P_CH (e.g., a block 3812_1), which corresponds to Step 1404 in FIG. 14. The communication device CM2 keeps applying the primary CH P_CH, which corresponds to Step 1408 in FIG. 14. The communication device CM3 keeps applying the non-primary CH NP_CH3 (e.g., a block 3812_3), which corresponds to Step 1408 in FIG. 14. The communication device CM4 switches to the non-primary CH NP_CH4 (e.g., a block 3812_4), which corresponds to Step 1410 in FIG. 14. Since the communication device CM1 switches to the primary CH P_CH, the communication devices CM1~CM2 and CM5 apply the primary CH P_CH (e.g., blocks 3812_1~3812_2 and 3812_5) by contention-based channel access (or in sequence, by turns).

It should be noted that FIGs. 7, 9A, 9B, 9C, and 15-38 illustrate the primary CH P_CH and the non-primary CHs NP_CH1~NP_CH4 have the same bandwidth, but is not limited herein. The bandwidth of the primary CH P_CH may be different from the bandwidths of the non-primary CHs NP_CH1~NP_CH4. In addition, the bandwidths of the non-primary CHs NP_CH1~NP_CH4 may be the same or different.

It should be noted that FIGs. 7, 9A, 9B, 9C, and 15-38 illustrate that the number of the non-primary CHs are 4, but is not limited herein.

The primary channel (e.g., P_CH) and the non-primary channel(s) (e.g., NP_CH1-NP_CH4) may correspond to one basic service set (BSS) operated by the network. A BSS may have one operating bandwidth (e.g., 80 MHz, 160 MHz, or 320 MHz).

When the NPCA mode is enabled, one of the non-primary channels (e.g., NP_CH3) may be an NPCA primary channel. At least one of the remaining non-primary channels (e.g., NP_CH4) may be available for NPCA operation and serve as an NPCA (secondary) channel. The set of channels available for NPCA operation may be indicated or notified (e.g., by the network via signaling).

When a non-primary channel (e.g., NP_CH1) is not available for NPCA (e.g., due to interference, or being disabled), such channel may serve as a non-NPCA channel. The unavailable channel set may also be indicated or notified (e.g., by the network via signaling).

The numbers, locations, and bandwidths of the CHs in the above-described schematic diagrams of the primary CH and non-primary CHs are merely examples for illustration purposes, and the present disclosure is not limited herein.

The locations and types of the above-described non-primary CHs are merely exemplary, and the present disclosure is not limited herein. For example, NP_CH2 may serve as an NPCA primary channel.

The combinations of the locations and types of the above-described non-primary CHs are merely exemplary, and the present disclosure is not limited herein. For example, block 1700, block 1902, and block 2102 may include a combination of at least one of non-NPCA channel(s), one NPCA primary channel, and NPCA (secondary) channel(s). Accordingly, the channel(s) used by block 1702, block 1900, and block 2100 may be included in the channel(s) used by block 1700, block 1902, and block 2102, respectively.

It should be noted that the present disclosure does not illustrate some messages, information and indications (e.g., the Short Interframe Space (SIFS), the Clear to Send (CTS), the Request to Send (RTS), the padding (delay), the backoff, the delta, etc.) for brevity.

It should be noted that the terms of "first", "second", "third" and "fourth" described above are used to distinguish the relevant statements, and do not limit the order of the relevant statements. The term of "subchannel" may be replaced by "subband". The operation of "determine" described above may be replaced by the operation of "compute", "calculate", "obtain", "generate", "output, "use", "choose/select", "decide" or "is configured to". The phrase of "according to" described above may be replaced by "in response to". The term of "via" described above may be replaced by "on", "in" or "at". The term of "when", "if" or "since" described above may be replaced by "in response to".

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device.

Examples of the hardware may include analog circuit(s), digital circuit(s) and/or mixed circuit(s). For example, the hardware may include ASIC(s), field programmable gate array(s) (FPGA(s)), programmable logic device(s), coupled hardware components or combination thereof. In another example, the hardware may include general-purpose processor(s), microprocessor(s), controller(s), digital signal processor(s) (DSP(s)) or combination thereof.

Examples of the software may include set(s) of codes, set(s) of instructions and/or set(s) of functions retained (e.g., stored) in a storage unit, e.g., a computer-readable medium. The computer-readable medium may include SIM, ROM, flash memory, RAM, CD-ROM/DVD-ROM/BD-ROM, magnetic tape, hard disk, optical data storage device, non-volatile storage unit, or combination thereof. The computer-readable medium (e.g., storage unit) may be coupled to at least one processor internally (e.g., integrated) or externally (e.g., separated). The at least one processor which may include one or more modules may (e.g., be configured to) execute the software in the computer-readable medium. The set(s) of codes, the set(s) of instructions and/or the set(s) of functions may cause the at least one processor, the module(s), the hardware and/or the electronic system to perform the related steps.

Examples of the electronic system may include a system on chip (SoC), system in package (SiP), a computer on module (CoM), a computer program product, an apparatus, a mobile phone, a laptop, a tablet computer, an electronic book or a portable computer system, and the communication device 20.

To sum up, embodiments of the present disclosure provide methods and communication devices for handling resource for communication. The network indicates a non-primary CH to the communication device, when the communication device determines to operate in the specific mode. The communication device performs the communication with the network by applying the non-primary CH. The communication device in the specific mode dynamically switches the CH for communicating with the network. Thus, the problem of handling the resources for communication can be solved.

## Claims

1. A wireless communication method of a communication device (16, 20), **characterized by:**
performing at least one communication operation with a network (14, 20) via a first channel, CH (1002); and
operating on a second CH according to at least one of an indication, a temporal constraint, and an interference condition (1004);
wherein at least one non-primary CH access, NPCA, CH is obtained by the network (14, 20).

2. The wireless communication method of claim 1, **characterized in that** the communication device (16, 20) operates on the second channel, when the second channel is available for the communication device (16, 20) or a bandwidth, BW, of the network (14, 20) is dynamically extended.

3. The wireless communication method of claim 1, **characterized in that** the indication is determined by the communication device (16, 20).

4. The wireless communication method of claim 3, **characterized in that** the wireless communication method further comprises:
transmitting the indication to the network (14, 20) via the first CH.

5. The wireless communication method of claim 4, **characterized in that** the indication is transmitted to the network (14, 20), after receiving an allocation inquiry message from the network (14, 20).

6. The wireless communication method of claim 5, **characterized in that** the wireless communication method further comprises:
transmitting an allocation request to the network (14, 20);
wherein the allocation inquiry message is received, after transmitting the allocation request.

7. The wireless communication method of claim 1, **characterized in that** the wireless communication method further comprises:
receiving a first allocation message from the network (14, 20) via the first CH according to the indication;
wherein the first allocation message indicates the second CH.

8. The wireless communication method of claim 1, **characterized in that** the second CH is determined according to the indication.

9. The wireless communication method of claim 1, **characterized in that** at least one of following limitations is satisfied:
the second CH is determined according to a measurement result obtained by the communication device (16, 20);
the second CH is determined by the network (14, 20), and the measurement result is comprised in the indication or a previous message prior to the indication; and
the previous message is transmitted to the network (14, 20) via a primary CH.

10. The wireless communication method of claim 9, **characterized in that** the measurement result comprises at least one of a first measurement result of at least one secondary CH, SCH, and a second measurement result of the at least one NPCA CH.

11. The wireless communication method of claim 10, **characterized in that** the first measurement result and the second measurement result is transmitted via a same message or different messages.

12. The wireless communication method of claim 10, **characterized in that** the communication device (16, 20) performs at least one measurement on the at least one NPCA CH to obtain the second measurement result, when supporting operating on a NPCA CH or preferring a CH reduction.

13. The wireless communication method of claim 1, **characterized in that** at least one of following limitations is satisfied:
the indication indicates at least one of a data information and a role intention;
the data information indicates at least one of a volume of data and a traffic type of the data, and the role intention indicates one of a CH reduction, a CH reservation, and a CH extension.

14. The wireless communication method of claim 1, **characterized in that** at least one of following limitations is satisfied:
the second CH is one of a primary CH, a first non-primary CH, and a second non-primary CH, when the indication indicates a CH reduction;
the first non-primary CH is comprised in the first CH, and has a narrower bandwidth than the first CH;
the second non-primary CH is not comprised in the first CH; and
the first non-primary CH or the second non-primary CH is indicated by a second allocation message received from the network (14, 20) via the first CH.

15. The wireless communication method of claim 14, **characterized in that** the wireless communication method further comprises:
determining the first non-primary CH or the second non-primary CH.

16. The wireless communication method of claim 14, **characterized in that** the second non-primary CH is one of the at least one NPCA CH.

17. The wireless communication method of claim 1, **characterized in that** at least one of following limitations is satisfied:
the second CH is the first CH or comprises a third non-primary CH, when a CH extension is enabled or the indication indicates the CH extension;
the second CH has a broader bandwidth than the first CH; and
the third non-primary CH is a whole available CH comprising the first CH, or is an additional available CH other than the first CH.

18. The wireless communication method of claim 1, **characterized in that** the second CH is the first CH, when the indication indicates a CH reservation.

19. The wireless communication method of claim 1, **characterized in that** at least one of following limitations is satisfied:
the temporal constraint is determined by the communication device (16, 20) or is indicated by the network (14, 20) for at least one communication device (16, 20); and
the temporal constraint is received from the network (14, 20) via the first CH.

20. The wireless communication method of claim 1, **characterized in that** the temporal constraint indicates at least one of a time instant and a timer.

21. The wireless communication method of claim 1, **characterized in that** the first CH is a fourth non-primary CH.

22. The wireless communication method of claim 1, **characterized in that** at least one of following limitations is satisfied:
a primary CH, the first CH, and the second CH are obtained by the network (14, 20) for a time duration; and
at least one of the primary CH, the first CH, and the second CH is allocated by the network (14, 20) to the communication device (16, 20).

23. The wireless communication method of claim 1, **characterized in that** the wireless communication method further comprises at least one of following operations:
switching from a primary CH to the first CH to communicate with the network (14, 20); and
receiving a third allocation message indicating the first CH from the network (14, 20) via the primary CH.

24. The wireless communication method of claim 1, **characterized in that** the communication device (16, 20) operates on the second CH, when operating in a specific mode; and the specific mode is a dynamic subchannel operation, DSO, mode.

25. The wireless communication method of claim 1, **characterized in that** the step of operating on the second CH comprises:
switching from the first CH to the second CH to communicate with the network (14, 20).

26. The wireless communication method of claim 1, **characterized in that** at least one of following limitations is satisfied:
the second CH comprises at least one of a primary CH, a specific non-primary CH, and a specific NPCA CH; and
the first CH comprises at least one of a primary CH, a specific non-primary CH, and a specific NPCA CH.

27. The wireless communication method of claim 1, **characterized in that** the first CH is not an NPCA CH; or the first CH is an NPCA CH.

28. The wireless communication method of claim 1, **characterized in that** at least one of following limitations is satisfied:
the second CH is one of a SCH, an NPCA PCH, and an NPCA SCH dedicated to the communication device (16, 20), when the first CH is a PCH;
the second CH is one of the PCH, the NPCA PCH, and the NPCA SCH, when the first CH is the SCH;
the second CH is one of the PCH, the SCH, and the NPCA SCH, when the first CH is the NPCA PCH; and
the second CH is one of the PCH, the SCH, and the NPCA PCH, when the first CH is the NPCA SCH.

29. A communication device (16, 20), **characterized by:**
at least one storage device; and
at least one processing circuit, coupled to the at least one storage device, wherein the at least one storage device is configured to store instructions, and the at least one processing circuit is configured to execute the instructions of:
performing at least one communication operation with a network (14, 20) via a first channel, CH (1002); and
operating on a second CH according to at least one of an indication, a temporal constraint, and an interference condition (1004);
wherein at least one non-primary CH access, NPCA, CH is obtained by the network (14, 20).

30. A wireless communication method of a network (14, 20) communicating with at least one communication device (16, 20), **characterized by:**
performing at least one communication operation with a communication device (16, 20) of the at least one communication device (16, 20) via a first channel, CH (1102); and
operating on a second CH according to at least one of an indication, a temporal constraint, and an interference condition (1104);
wherein at least one non-primary CH access, NPCA, CH is obtained by the network (14, 20).
